# EUROPÄISCHE PATENTSCHRIFT

(11) **EP 3 336 063 B1**
(45) Veröffentlichungstag und Bekanntmachung des Hinweises auf die Patenterteilung: **29.01.2020**
(21) Anmeldenummer: 17205125.2
(22) Anmeldetag: 04.12.2017
(51) Int. Cl.: C02F 1/00, C02F 1/42, B01J 49/75, B01J 49/85

(54) **VERFAHREN ZUM BETRIEB EINER WASSERENTHÄRTUNGSANLAGE MIT ZEITOPTIMIERTER UND SALZOPTIMIERTER REGENERATION**
METHOD FOR OPERATING A WATER SOFTENING SYSTEM INCLUDING TIME-OPTIMISED AND SALT-OPTIMISED REGENERATION
PROCÉDÉ DE FONCTIONNEMENT D'UNE INSTALLATION D'ADOUCISSEMENT D'EAU À RÉGÉNÉRATION OPTIMISÉE EN TEMPS ET OPTIMISÉE EN SEL

(30) Priorität: 16.12.2016 DE 102016225301
(43) Veröffentlichungstag der Anmeldung: 20.06.2018
(73) Patentinhaber: Judo Wasseraufbereitung GmbH, 71364 Winnenden (DE)
(72) Erfinder: SCHWARZ, Andreas, 88094 Oberteuringen (DE); BROCKE, Sebastian, 74369 Löchgau (DE)
(74) Vertreter: Kohler Schmid Möbus Patentanwälte

(56) Entgegenhaltungen:
- WO-A1-2013/153150
- WO-A2-2010/045934
- DE-A1-102010 028 756
- US-A- 5 544 072

## Beschreibung

Die Erfindung betrifft ein Verfahren zum Betrieb einer Wasserenthärtungsanlage,
wobei die Wasserenthärtungsanlage umfasst
- mindestens einen Behälter mit lonentauscherharz,
- ein Vorratsgefäß mit Regeneriermittellösung,
- und eine elektronische Steuereinheit zur automatischen Durchführung von Regenerationen des mindestens einen Behälters mit lonentauscherharz mittels einer Arbeitslösung, wobei die Arbeitslösung die Regeneriermittellösung oder eine verdünnte Regeneriermittellösung ist,
und wobei die Steuereinheit eine jeweilige Regeneration als salzoptimierte Regeneration oder als zeitoptimierte Regeneration auslösen kann.

Eine solches Verfahren ist aus der DE 10 2010 028 756 A1 bekannt geworden.

In Haushalten oder auch in technischen Anlagen wird aus vielfältigen Gründen oftmals enthärtetes Wasser gewünscht oder benötigt. Häufig werden dafür Wasserenthärtungsanlagen eingesetzt, die auf lonentauscherharz basieren. Ein lonentauscher nimmt die Härtebildner (Calzium- und Magnesiumionen) auf und gibt dafür nicht härtebildende Ionen (meist Natriumionen) ab. Das lonentauscherharz kann dabei nur eine begrenzte Menge an Härtebildnern binden (Erschöpfung des lonentauscherharzes) und muss daher von Zeit zu Zeit regeneriert werden.

Für die Regeneration wird typischerweise das lonentauscherharz einer verdünnten Salzsole ausgesetzt. Während der Regeneration kann das lonentauscherharz keine Enthärtungsfunktion wahrnehmen.

Die Durchführung der Regeneration eines lonentauscherharzes verursacht aufgrund des für die Regeneration verbrauchten Salzes zur Zubereitung einer Salzlösung gewisse Kosten. Aus der DE 10 2012 007 589 A1 ist es bekannt geworden, bei der Bestimmung des Auslösezeitpunkts einer Regeneration die geforderte Produktwasserqualität zu berücksichtigen, um den Salzverbrauch zu optimieren. Ebenso wird beschrieben, in einer Wasserenthärtungsanlage mehrere Behälter mit lonentauscherharz vorzusehen, so dass während der Regeneration eines Behälters wenigstens ein anderer, nicht erschöpfter Behälter für eine unterbrechungsfreie Wasserenthärtung zur Verfügung steht.

In der DE 10 2010 028 756 A1 wird die Regeneration eines lonentauscherharzes einer Enthärtungsvorrichtung beschrieben, wobei eine Salzsole während ihres Transports zur Enthärtungsvorrichtung in einen Strom von Verdünnungswasser zudosiert wird. Für eine schnelle Regeneration wird eine höhere Konzentration, und für eine salzsparende Regeneration eine stärkere Verdünnung vorgeschlagen.

### Aufgabe der Erfindung

Es ist die Aufgabe der vorliegenden Erfindung, ein Verfahren zum Betrieb einer Wasserenthärtungsanlage zur Verfügung zu stellen, mit dem eine gute Verfügbarkeit der Wasserenthärtungsfunktion bei angemessenem Salzverbrauch erreicht werden kann.

### Kurze Beschreibung der Erfindung

Diese Aufgabe wird in einer ersten Alternative erfindungsgemäß gelöst durch ein Verfahren der eingangs genannten Art, das dadurch gekennzeichnet ist, dass eine Regeneration stets als zeitoptimierte Regeneration ausgelöst wird, wenn zu Beginn dieser Regeneration eine Wasserentnahme an der Wasserenthärtungsanlage stattfindet.

Weiterhin wird diese Aufgabe in einer zweiten Alternative erfindungsgemäß gelöst durch ein Verfahren der eingangs genannten Art, das dadurch gekennzeichnet ist, dass eine Regeneration stets als zeitoptimierte Regeneration ausgelöst wird, wenn
- zu Beginn dieser Regeneration eine Wasserentnahme an der Wasserenthärtungsanlage stattfindet,
- und dabei eine Durchflussgeschwindigkeit oder eine bisherige Durchflussmenge oder eine bisherige Durchflussdauer dieser Wasserentnahme einen ersten Grenzwert GW1 überschreitet.

Im Rahmen der Erfindung können Regenerationen zeitoptimiert oder salzoptimiert ausgelöst bzw. durchgeführt werden. Bei zeitoptimierten Regenerationen sind im Vergleich zu salzoptimierten Regenerationen- Besalzungszeiten, während denen das lonentauscherharz (5; 5a, 5b) mit der Arbeitslösung in Kontakt steht, verkürzt. Zusätzlich oder alternativ werden einzelne Spülschritte, mit denen die Arbeitslösung aus einem Behälter (4; 4a, 4b) mit dem lonentauscherharz (5; 5a, 5b) ausgespült wird, weggelassen oder beschleunigt durchgeführt, insbesondere mit kürzerer Dauer und/oder höherem Volumenstrom.

Bei einer salzoptimierten Regeneration wird eine (möglichst) hohe Austauschkapazität pro eingesetzter Salzmenge angestrebt bzw. erreicht. Die Austauschkapazität beschreibt die Menge an Erdalkaliionen, die durch den lonentauscher zwischen dem Ende der letzten Regeneration und der Erschöpfung des lonentauscherharzes zurückgehalten werden kann. Eine salzoptimierte Regeneration wird typischerweise durch eine lange Wechselwirkungszeit von Arbeitslösung und lonentauscherharz und/oder eine geringere Menge an Arbeitslösung und/oder eine geringere Konzentration der eingesetzten Arbeitslösung erreicht. Salzoptimierte Regenerationen sind besonders kostengünstig, da vergleichsweise wenig Salz verbraucht wird. Bei einer zeitoptimierten Regeneration wird eine (möglichst) kurze Regenerationsdauer angestrebt bzw. erreicht. Die Regenerationsdauer bezeichnet die Zeit zwischen dem Beginn einer Regeneration und dem Ende einer Regeneration, während der der Behälter mit lonentauscherharz nicht für eine Wasserenthärtung zur Verfügung steht. Eine zeitoptimierte Regeneration wird typischerweise durch eine kurze Wechselwirkungszeit von Arbeitslösung und lonentauscherharz und/oder eine große Menge an Arbeitslösung und/oder eine hohe Konzentration der eingesetzten Arbeitslösung und/oder eine kurze Ausspülzeit erreicht. Zeitoptimierte Regenerationen stellen ggf. nur einen Teil der maximalen Kapazität eines Behälters zur Verfügung und sind teurer als salzoptimierte Regenerationen, insbesondere aufgrund der Kosten für eine größere eingesetzte Salzmenge, oder auch für eine größere Menge an Spülwasser.

Während der Regeneration eines Behälters mit lonentauscherharz steht dieser nicht für eine Wasserenthärtung zur Verfügung. Falls es keine weiteren Behälter mit lonentauscherharz gibt, kann während der Regeneration des Behälters die Wasserversorgung unterbrochen werden (etwa wenn nicht enthärtetes Wasser nachfolgende Einrichtungen beschädigen könnte) oder es wird über einen Bypass nur nicht enthärtetes Wasser bereitgestellt (was im Allgemeinen bevorzugt wird, wenn ein vorübergehender Härteanstieg akzeptabel ist). Falls mehrere Behälter mit lonentauscherharz zur Verfügung stehen, können ein oder mehrere weitere, nicht in Regeneration befindliche Behälter die Versorgung mit enthärtertetem Wasser aufrechterhalten, wenngleich mit reduzierter Durchflussleistung der gesamten Wasserenthärtungsanlage.

Im Rahmen einer automatischen Regenerationsauslösung wird beispielsweise anhand des Verbrauchs von (enthärtetem) Wasser seit der letzten Regeneration, einer bekannten (bevorzugt laufend überwachten) Wasserhärte des Rohwassers, einer bekannten (maximalen) Austauschkapazität des lonentauscherharzes eines Behälters und/oder der vergangenen Zeit seit der letzten Regeneration ermittelt, wenn eine Regeneration des Behälters notwendig ist; man beachte, dass eine Regeneration insbesondere auch vor einer Erschöpfung aus hygienischen Gründen notwendig sein kann. Die Überwachung der für die Bestimmung eines Regenerationszeitpunkts notwendigen Informationen sowie die Auslösung und Durchführung einer Regeneration obliegen typischerweise einer elektronischen Steuereinheit.

Wenn als Ergebnis der Überwachung der Wasserenthärtungsanlage eine Regeneration begonnen werden muss, wird im Rahmen der Erfindung überprüft, ob gerade eine Wasserentnahme läuft.

In der ersten Alternative (auch bezeichnet als Alternative 1) wird im Falle einer laufenden Wasserentnahme die anstehende Regeneration stets als zeitoptimierte Regeneration gestartet. In dieser besonders einfachen Alternative wird die laufende Wasserentnahme als Indiz dafür gewertet, dass in naher Zeit weiteres, möglichst enthärtetes Wasser benötigt wird, so dass die Regeneration möglichst schnell beendet werden sollte, um Entnahmen von nicht enthärtetem Wasser oder Zeiten von reduziertem enthärtetem Wasserdurchfluss (oder gar Zeiten von Versorgungsunterbrechungen trotz aktuellem Bedarf) zu minimieren.

Die erste Alternative wird vor allem angewandt, wenn nur ein Behälter mit lonentauscherharz zur Verfügung steht und bei dessen Regeneration nur nicht enthärtetes Wasser (oder gar kein Wasser) bereitgestellt werden kann. In diesem Fall führt jede Entnahme während einer Regeneration zu einer Belastung der nachfolgenden Installation mit nicht enthärtetem Wasser (oder gar zu einer Versorgungsunterbrechung).

In der zweiten Alternative (auch genannt Alternative 2) wird im Falle einer laufenden Wasserentnahme weiterhin geprüft, ob eine aktuelle Durchflussgeschwindigkeit oder eine bisherige Durchflussmenge oder eine bisherige Durchflussdauer der laufenden Wasserentnahme einen zugehörigen ersten Grenzwert GW1 überschreitet. Erfindungsgemäß wird wenigstens eine (und typischerweise nur eine) der drei Messgrößen Durchflussgeschwindigkeit, bisherige Durchflussmenge, bisherige Durchflussdauer überprüft, d.h. erfasst und mit dem (jeweils) zugehörigen ersten Grenzwert GW1 verglichen. Wenn bei der laufenden Wasserentnahme der erste Grenzwert GW1 bei wenigstens einer der überprüften Messgrößen überschritten ist, wird dies als Indiz dafür gewertet, dass in naher Zeit weiteres, möglichst enthärtetes Wasser *in einem größeren Ausmaß* benötigt wird, so dass die Regeneration möglichst schnell beendet werden sollte, um Entnahmen von nicht enthärtetem Wasser (oder gar Zeiten von Versorgungsunterbrechungen trotz aktuellem Bedarf) zu minimieren. Entsprechend wird dann die anstehende Regeneration als zeitoptimierte Regeneration gestartet.

In dieser Variante führt, wenn eine Regeneration ansteht, nicht bereits jede geringfügige, laufende Wasserentnahme zu einer zeitoptimierten Regeneration. Vielmehr kann, wenn der erste Grenzwert GW1 (der größer "null" gewählt wird) unterschritten bleibt, nach wie vor eine salzoptimierte Regeneration ausgelöst bzw. durchgeführt werden, um Kosten zu sparen und ggf. eine nur teilweise wiederhergestellte Kapazität zu vermeiden. Wenn aber aufgrund eines hohen Wasserdurchflusses oder einer hohen bisherigen bereitgestellten Wassermenge oder einer langen bisherigen Durchflussdauer (oder auch mehrerer dieser Umstände gleichzeitig) zu erwarten ist, dass die laufende Wasserentnahme noch eine erhebliche weitere Wassermenge verlangen wird, sind die erhöhten Kosten für eine zeitoptimierte Regeneration angemessen, um die Menge an abgegebenem, nicht enthärteten Wasser oder Zeiten von reduziertem enthärteten Wasserdurchfluss (oder gar Zeiten einer Versorgungsunterbrechung) zu minimieren.

Die zweite Alternative wird vor allem angewandt, wenn mehrere Behälter mit lonentauscherharz zur Verfügung stehen, so dass ein oder mehrere Behälter eine Versorgung mit enthärtetem Wasser aufrechterhalten können, während ein erster Behälter regeneriert wird, wenngleich mit reduziertem Durchfluss der gesamten Wasserenthärtungsanlage.

Andere Regenerationen, die nicht den Bedingungen der Alternativen 1) oder 2) genügen, werden bevorzugt als salzoptimierte Regenerationen ausgelöst, um Kosten zu sparen oder eine nur teilweise wiederhergestellte Behälterkapazität zu vermeiden (was jedoch nicht ausschließt, weitere Bedingungen vorzusehen, unter denen eine andere Regeneration auch als zeitoptimierte Regeneration gestartet wird).

### Bevorzugte Ausführungsformen der Erfindung

### Variante zur ersten Alternative

Bei einer bevorzugten Variante des Verfahrens gemäß der obigen Alternative 1 ist vorgesehen, dass die Wasserenthärtungsanlage lediglich einen Behälter mit lonentauscherharz aufweist, und während der Regeneration dieses Behälters die Wasserenthärtungsanlage kein Wasser oder nicht enthärtetes Wasser zur Verfügung stellt. Bei nur einem Behälter führt dessen Regeneration stets zu einer Unterbrechung der Versorgung mit enthärtetem Wasser. Durch die Variante wird sichergestellt, dass bezüglich laufender Wasserentnahmen Beaufschlagungen der nachfolgenden Installation mit hartem Wasser (oder gar Zeiten einer Versorgungsunterbrechung trotz Wasserbedarfs) minimiert werden. Alternativ ist es auch möglich, dass die Wasserenthärtungsanlage in der Alternative 1 mehrere Behälter mit lonentauscherharz aufweist, und während der Regeneration eines ersten Behälters der oder die übrigen Behälter enthärtetes Wasser zur Verfügung stellen; in diesem Fall kann sehr schnell eine volle Enthärtungsleistung wieder zur Verfügung gestellt werden.

Man beachte, dass ein Behälter mehrere Teilbehälter parallel oder seriell zueinander umfassen kann; mehrere Teilbehälter, die nur gemeinsam betrieben und regeneriert werden können, werden als ein Behälter angesehen.

### Varianten zur zweiten Alternative

In einer bevorzugten Variante zum Verfahren gemäß der Alternative 2 ist vorgesehen, dass die Wasserenthärtungsanlage mehrere Behälter mit lonentauscherharz aufweist, und während der Regeneration eines ersten Behälters der oder die übrigen Behälter enthärtetes Wasser zur Verfügung stellen. Mit dem oder den übrigen Behältern kann eine Versorgung mit enthärtetem Wasser bei reduzierter Durchflussmenge aufrecht erhalten werden, die für geringfügige Wasserentnahmen ausreicht. Entsprechend können bei geringfügigen Wasserentnahmen Kosten gespart werden, indem hier salzoptimierte Wasserentnahmen zugelassen werden, ohne die erforderliche Verfügbarkeit von enthärtetem Wasser zu beeinträchtigen. Alternativ ist es auch möglich, dass die Wasserenthärtungsanlage in der Alternative 2 lediglich einen Behälter mit lonentauscherharz aufweist, und während der Regeneration dieses Behälters die Wasserenthärtungsanlage kein Wasser oder nicht enthärtetes Wasser zur Verfügung stellt; wenn geringfügige Beaufschlagungen mit hartem Wasser (oder kurze Versorgungsunterbrechungen) für die nachfolgende Wasserinstallation unschädlich sind, können auf diese Weise Kosten eingespart werden.

Bei einer bevorzugten Weiterentwicklung dieser Variante wird für die Regeneration des ersten Behälters der erste Grenzwert GW1 in Abhängigkeit von der Restkapazität des oder der übrigen Behälter bestimmt. Dadurch kann die Gefahr minimiert werden, dass die Restkapazität des oder der übrigen Behälter während einer (trotz laufender Wasserentnahme) salzoptimiert ausgelösten Regeneration des ersten Behälters erschöpft; umgekehrt können unnötige zeitoptimierte Regenerationen des ersten Behälters verhindert werden. Im Allgemeinen wird GW1 umso höher gewählt, je höher die Restkapazität des oder der übrigen Behälter ist. Typischerweise wird von der Steuereinheit eine individuelle Restkapazität für jeden einzelnen Behälter mitverfolgt.

Bevorzugt ist auch eine Weiterbildung, die vorsieht, dass in der Steuereinheit eine Anzahl N von angeschlossenen Behältern mit lonentauscherharz erfasst wird, und dass der erste Grenzwert GW1 in Abhängigkeit von der Anzahl N bestimmt wird. Je größer die Anzahl der Behälter, desto größer ist im Allgemeinen die Enthärtungsleistung der übrigen Behälter, so dass bei mehr Behältern eine Nichtverfügbarkeit eines Behälters eher hingenommen werden kann; entsprechend können durch weniger häufiges Auslösen von zeitoptimierten Regeneration Kosten gespart werden. Im Allgemeinen wird GW1 umso höher gewählt, je größer die Anzahl N der Behälter ist. Die Anzahl der Behälter kann an der Steuereinheit manuell eingegeben werden, oder auch von der Steuereinheit automatisch ermittelt werden.

Ebenfalls bevorzugt ist eine Weiterentwicklung, die vorsieht, dass in der Steuereinheit eine Regenerationsdauer des mindestens einen Behälters mit lonentauscherharz erfasst wird, und dass der erste Grenzwert GW1 in Abhängigkeit von der Regenerationsdauer des oder der zu regenerierenden Behälter bestimmt wird. Durch diese Variante können unnötige zeitoptimierte Regenerationen vermieden werden, was Kosten einspart. Bei kurzer Regenerationsdauer ist eine Nichtverfügbarkeit eher zu verkraften als bei langer Regenerationsdauer; entsprechend können bei kurzer Regenerationsdauer die Regenerationen eher als salzoptimierte Regenerationen gestartet werden. Im Allgemeinen wird GW1 umso höher gewählt, je kürzer die Regenerationsdauer ist. Die Regenerationsdauer kann dadurch erfasst werden, dass eine Information über den Typus eines Behälters in der Steuereinheit erfasst wird und in der Steuereinheit weiterhin eine Zuordnungstabelle hinterlegt ist, die für verschiedene Typen von Behältern die zugehörige Regenerationsdauer enthält. Die Regenerationsdauer bezieht sich typischerweise auf eine salzoptimierte Regeneration. Die Regenerationsdauer kann manuell an der Steuereinheit eingegeben werden, oder auch von der Steuereinheit automatisch ermittelt werden, beispielsweise durch eine erste (salzoptimierte) Regeneration, oder durch manuelle Eingabe oder automatisches Erkennen des angeschlossenen Typus von Behälter, etwa mittels RFID, und Auswerten einer Zuordnungstabelle. Typischerweise haben alle angeschlossenen Behälter die gleiche Regenerationsdauer bzw. sind vom gleichen Typus.

### Allgemeine Varianten

Bevorzugt ist auch eine Verfahrensvariante, bei der eine als zeitoptimierte Regeneration ausgelöste Regeneration als salzoptimierte Regeneration fortgesetzt wird, wenn während dieser Regeneration die Wasserentnahme endet. Entsprechend kann die nötige Salzmenge für die Regeneration noch zu einem gewissen Grad reduziert werden. Das Ende der Wasserentnahme wird als Indiz dafür gewertet, dass in nächster Zeit nur wenig oder kein enthärtetes Wasser benötigt wird. Insbesondere wenn die zu Ende gegangene Wasserentnahme unerwartet war, kann die weitere Regeneration salzoptimiert erfolgen.

Eine Weiterentwicklung dieser Variante sieht vor, dass im Rahmen von zeitoptimierten Regenerationen und salzoptimierten Regenerationen eines Behälters die Arbeitslösung kontinuierlich durch den Behälter geleitet wird, und dass für die Fortsetzung der Regeneration als salzoptimierte Regeneration, während die Arbeitslösung kontinuierlich durch den Behälter geleitet wird, die Konzentration und/oder die Durchflussgeschwindigkeit der Arbeitslösung gesenkt wird. Mit diesen Maßnahmen lässt sich der Salzverbrauch wirkungsvoll absenken.

Bei einer vorteilhaften Variante wird eine als salzoptimierte Regeneration ausgelöste Regeneration als zeitoptimierte Regeneration fortgesetzt, wenn während dieser Regeneration eine Wasserentnahme beginnt. Dadurch kann die Wiederherstellung der vollen Enthärtungsleistung beschleunigt werden. Die beginnende Wasserentnahme wird als Indiz dafür gewertet, dass in nächster Zeit eine größere Menge enthärteten Wassers benötigt werden wird.

Eine bevorzugte Weiterbildung dieser Variante sieht vor, dass im Rahmen von zeitoptimierten Regenerationen und salzoptimierten Regenerationen eines Behälters die Arbeitslösung kontinuierlich durch den Behälter geleitet wird, und dass für die Fortsetzung der Regeneration als zeitoptimierte Regeneration, während die Arbeitslösung kontinuierlich durch den Behälter geleitet wird, die Konzentration und/oder die Durchflussgeschwindigkeit der Arbeitslösung erhöht wird. Dadurch kann die Beaufschlagung des lonentauscherharzes mit Natriumionen wirkungsvoll beschleunigt werden.

Bevorzugt ist auch eine Verfahrensvariante, bei der eine bereits gestartete Regeneration eines Behälters abgebrochen wird und in einen normalen Betriebsmodus gewechselt wird, in welchem dieser Behälter an der Wasserenthärtung teilnimmt, wenn
- während der Regeneration eine Wasserentnahme neu startet,
- und zu diesem Zeitpunkt die Restkapazität dieses Behälters einen zweiten Grenzwert GW2 überschreitet. Wenn genügend Restkapaziät noch oder wieder in dem Behälter vorhanden ist, kann durch den Abbruch schnell eine volle Enthärtungsleistung der Wasserenthärtungsanlage zur Verfügung gestellt werden. Durch die Voraussetzung der Überschreitung des zweiten Grenzwerts wird die Wahrscheinlichkeit, dass während der begonnenen Wasserentnahme die Restkapazität des Behälters vollständig erschöpft wird, reduziert. Der zweite Grenzwert sollte an der Wassermenge typischer, zu erwartender Wasserentnahmen orientiert werden. Für diese Variante muss die während der Regeneration des Behälters sich wieder aufbauende Kapazität zumindest näherungsweise mitverfolgt werden, etwa über eine Zeitmessung.

Besonders bevorzugt ist eine Variante, die vorsieht, dass in der Steuereinheit Zeitintervalle erfasst werden, zu denen voraussichtlich ein erhöhter Bedarf an enthärtetem Wasser besteht,
und dass eine Regeneration auch dann stets als zeitoptimierte Regeneration ausgelöst wird, wenn
- zu Beginn dieser Regeneration keine Wasserentnahme an der Wasserenthärtungsanlage stattfindet,
- und dabei der Beginn dieser Regeneration innerhalb eines solchen Zeitintervalls liegt. Dadurch können Engpässe in der Enthärtungsleistung in den Zeitintervallen des erhöhten Bedarfs vermieden werden. Die Zeitintervalle können manuell programmiert werden, oder auch von der Steuereinheit aus erfassten Wasserentnahmen der Vergangenheit ("Erfahrungswerte") abgeleitet werden. Die Zeitintervalle werden typischerweise über die Tageszeit oder auch über Tageszeit und den Wochentag definiert. Zeitintervalle mit erhöhtem Bedarf an enthärtetem Wasser sind meist die Morgenstunden (etwa täglich zwischen 6:00 Uhr und 8:30 Uhr) und die Abendstunden (etwa täglich zwischen 18:00 Uhr und 22:30 Uhr), wobei die Intervalle für Wochenendtage (Samstag und Sonntag) verschoben sein können. Bevorzugt werden die Zeitintervalle mittels einer intelligenten (insbesondere selbstlernenden) Elektronik bzw. Software auf Grundlage von automatisch erfassten Durchflussmengen und Entnahmezeiten selbstständig festgelegt.

Vorteilhaft ist weiterhin eine Variante, bei der eine Regeneration auch dann stets als zeitoptimierte Regeneration ausgelöst wird, wenn eine Restkapazität der gesamten Wasserenthärtungsanlage einen dritten Grenzwert GW3 unterschreitet. Dadurch können Engpässe bei der Enthärtungsleistung vermieden oder gemindert werden, wenn alsbald nach dem Auslösen der Regeneration eine Wasserentnahme (insbesondere unerwartet) beginnen sollte. Bei sehr geringer Restkapazität der gesamten Wasserenthärtungsanlage muss damit gerechnet werden, dass weitere Behälter mit lonentauscherharz bei einer (insbesondere unerwartet) beginnenden Wasserentnahme auch alsbald erschöpfen, so dass der gerade zur Regeneration anstehende Behälter möglichst schnell regeneriert werden sollte. Bei sehr geringer Restkapazität kann bei einer unerwarteten Wasserentnahme in der Regel nicht ohne weiteres in einen regulären Betriebsmodus zurückgewechselt werden.

Bevorzugt ist weiterhin eine Variante, bei der bei zeitoptimierten Regenerationen im Vergleich zu salzoptimierten Regenerationen
- Besalzungszeiten, während denen das lonentauscherharz mit der Arbeitslösung in Kontakt steht, verkürzt sind,
- und/oder ein Volumenstrom der Arbeitslösung durch das lonentauscherharz vergrößert ist,
- und/oder eine Konzentration der Arbeitslösung erhöht ist,
- und/oder einzelne Spülschritte, mit denen die Arbeitslösung aus einem Behälter mit dem lonentauscherharz ausgespült wird, weggelassen oder beschleunigt durchgeführt werden, insbesondere mit kürzerer Dauer und/oder höherem Volumenstrom. Durch eine kürzere Besalzungszeit wird gegebenenfalls nicht die maximale Kapazität der Wasserenthärtungsanlage bzw. des Behälters erreicht, jedoch reicht in der Regel eine Teilkapazität aus, um eine ausreichende Menge an enthärtetem Wasser zu liefern. Die Teilkapazität steht durch die kürzere Besalzungszeit sehr schnell zur Verfügung. Ggf. kann eine kürzere Besalzungszeit jedoch durch eine höhere Konzentration der Arbeitslösung ausgeglichen werden, um die maximale Kapazität wieder herzustellen. Ein größerer Volumenstrom kann durch einen zusätzlichen Injektor oder eine Erhöhung der Pumpenleistung erreicht werden. Durch den höheren Volumenstrom kann durch das Regenerieren verbrauchte Arbeitslösung um das lonentauscherharz herum schneller ausgetauscht werden, wodurch der Rücktausch der Ionen am Harz beschleunigt wird. Durch die Erhöhung der Konzentration der Arbeitslösung erfolgt der Rücktausch der Ionen am Harz schneller, ggf. auch zu einem größeren Anteil. Im Einzelfall kann ein sehr hoher Volumenstrom an Arbeitslösung auch eine bei der zeitoptimierten Regeneration verringerte Konzentration der Arbeitslösung überkompensieren, etwa wenn bei höherem Hartwasserstrom im Verhältnis weniger Regeneriermittellösung an einem Injektor mitgerissen wird. Durch das Weglassen oder Beschleunigen von Spülschritten kann eine erhebliche Verkürzung des gesamten Regenerationsvorgangs erreicht werden; allerdings muss für eine ausreichende Reinigungsleistung dann in der Regel der Volumenstrom an Spülwasser erhöht werden. Typische Spülschritte im Rahmen einer (salzoptimierten) Regeneration sind 1) das Verdrängen der Arbeitslösung, das ist ein langsames Waschen, wobei Wasser in das Harz "nachgeschoben" wird (hierdurch kann die Arbeitslösung auch während des Verdrängens noch zur Regeneration des Harzes beitragen), weiter 2) das Rückspülen, das ist ein schnelles Waschen, und 3) das Auswaschen oder Erstfiltrat, das ist ein schnelles abschließendes Waschen in der Fließrichtung des normalen Betriebsmodus. Zur Verkürzung in einer zeitoptimierten Regeneration kann beispielsweise das Verdrängen gemäß 1) beschleunigt oder weggelassen werden, oder auch das Rückspülen gemäß 2) beschleunigt werden.

### Erfindungsgemäße Verwendung der Wasserenthärtungsanlagen

In den Rahmen der vorliegenden Erfindung fällt auch die Verwendung einer Wasserenthärtungsanlage, umfassend
- mindestens einen Behälter mit lonentauscherharz,
- ein Vorratsgefäß mit Regeneriermittellösung,
- und eine elektronische Steuereinheit zur automatischen Durchführung von Regenerationen des mindestens einen Behälters mit lonentauscherharz mittels einer Arbeitslösung, wobei die Arbeitslösung die Regeneriermittellösung oder eine verdünnte Regeneriermittellösung ist,
und wobei die Steuereinheit eine jeweilige Regeneration als salzoptimierte Regeneration oder als zeitoptimierte Regeneration auslösen kann,
die dadurch gekennzeichnet ist, dass die Wasserenthärtungsanlage eingerichtet ist zur Durchführung eines erfindungsgemäßen, oben beschriebenen Verfahrens. Mit der Verwendung der erfindungsgemäßen Wasserenthärtungsanlage kann eine gute Verfügbarkeit der Wasserenthärtungsfunktion bei angemessenem Salzverbrauch erreicht werden. Engpässe bei der Enthärtungsleistung werden vermieden bzw. reduziert.

Bei einer bevorzugten Ausführungsform der Verwendung der erfindungsgemäßen Wasserenthärtungsanlage ist die Steuereinheit dazu ausgebildet ist, zwischen einem Verfahren gemäß der obigen Alternative 1 und einem Verfahren gemäß der obigen Alternative 2 umzuschalten. Dadurch kann der Betrieb der Wasserenthärtungsanlage in Hinblick auf Salzverbrauch bzw. Kosten einerseits und Verfügbarkeit von Enthärtungsleistung andererseits angepasst bzw. optimiert werden.

Eine bevorzugte Weiterbildung dieser Ausführungsform sieht vor, dass die Steuereinheit dazu ausgebildet ist, zwischen dem Verfahren gemäß der Alternative 1 und dem Verfahren gemäß der Alternative 2 in Abhängigkeit von einer Anzahl N von angeschlossenen Behältern mit lonentauscherharz, die in der Steuereinheit erfasst wird, umzuschalten. Je mehr Behälter für die Wasserenthärtung zur Verfügung stehen, desto eher können weitere Behälter den zeitweiligen Ausfall eines ersten Behälters bei einer Regeneration auffangen, und umso eher kann die (im Vergleich zur ersten Alternative kostengünstigere) zweite Alternative gewählt werden. Durch diese Umschaltbarkeit kann die Steuereinheit für verschiedene Ausbaustufen der Wasserenthärtungsanlage (d.h. verschiedene Anzahl von angeschlossenen Behältern) angepasst werden. Man beachte, dass neben der Behälteranzahl auch andere Einflussgrößen für die Wahl der Alternative 1 oder 2 berücksichtigt werden können, etwa die Austauschkapazität oder eine (salzoptimierte) Regenerationsdauer der einzelnen Behälter.

Bevorzugt ist dabei vorgesehen, die Steuereinheit dazu ausgebildet ist, bei N=1 in das Verfahren gemäß Alternative 1 zu schalten, und bei N≥ 2 in das Verfahren gemäß Alternative 2 zu schalten. Dieses Umschalten ist besonders einfach und reicht in der Regel aus, um die Wasserenthärtungsanlage wirtschaftlich, aber auch mit angemessener Verfügbarkeit von Enthärtungsleistung zu betreiben.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: ein Ablaufdiagramm einer Variante eines erfindungsgemäßen Verfahrens gemäß Alternative 1);
- Fig. 2: ein Ablaufdiagramm einer Variante eines erfindungsgemäßen Verfahrens gemäß Alternative 2), mit Änderung des Regenerationsmodus bei Änderung der Wasserentnahmesituation;
- Fig. 3: ein Ablaufdiagramm einer weiteren Variante eines erfindungsgemäßen Verfahrens gemäß Alternative 2), mit Abbruch einer laufenden Regeneration bei Beginn einer Wasserentnahme;
- Fig. 4: eine erste Ausführungsform einer erfindungsgemäßen Wasserenthärtungsanlage, mit einem Behälter mit lonentauscherharz, in einem normalen Betriebsmodus;
- Fig. 5a: die Wasserenthärtungsanlage von Fig. 3, in einer zeitoptimierten Regeneration, während der Besalzung des Behälters;
- Fig. 5b: die Wasserenthärtungsanlage von Fig. 3, in einer zeitoptimierten Regeneration, während des Spülens des Behälters;
- Fig. 6a: die Wasserenthärtungsanlage von Fig. 3, in einer salzoptimierten Regeneration, während der Besalzung des Behälters;
- Fig. 6b: die Wasserenthärtungsanlage von Fig. 3, in einer salzoptimierten Regeneration, während des Spülens des Behälters;
- Fig. 7a: eine zweite Ausführungsform einer erfindungsgemäßen Wasserenthärtungsanlage, mit zwei Behältern mit lonentauscherharz, in einer zeitoptimierten Regeneration eines ersten Behälters, während des Besalzens;
- Fig. 7b: die Wasserenthärtungsanlage von Fig. 7a, in einer salzoptimierten Regeneration des ersten Behälters, während des Besalzens.

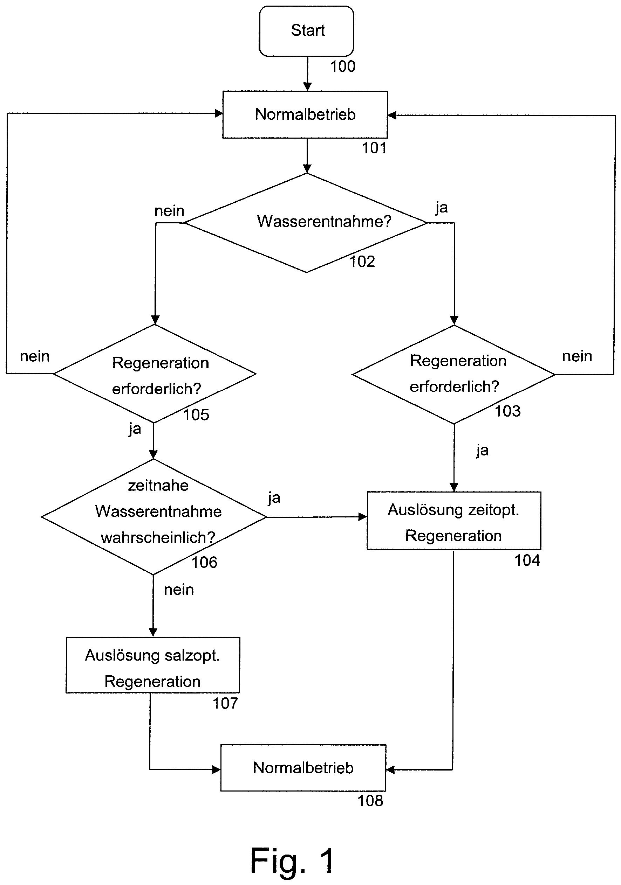

Die Figuren 1 bis 3 zeigen Varianten von erfindungsgemäßen Verfahren zum Betrieb einer Wasserenthärtungsanlage. Die Wasserenthärtungsanlage stellt enthärtetes (oder teilenthärtetes) Wasser zur Verfügung, und verfügt dafür über wenigstens einen, bevorzugt wenigstens zwei Behälter mit lonentauscherharz. Der Behälter bzw. die einzelnen Behälter werden laufend darauf überprüft, ob eine Regeneration erforderlich ist, insbesondere über eine laufende Mitverfolgung des Erschöpfungsgrads auf Grundlage der behandelten Wassermenge, gewichtet mit der Rohwasserhärte bei der jeweiligen Wasserentnahme. Im Folgenden wird dargestellt, wie im Rahmen der Erfindung bezüglich der Regeneration eines Behälters mit lonentauscherharz vorgegangen wird. Man beachte, dass im Falle mehrerer Behälter die Regeneration der Behälter grundsätzlich einzeln erfolgt.

In **Fig. 1** ist eine Variante auf Basis von Alternative 1 dargestellt. Diese Variante kann insbesondere mit einer Wasserenthärtungsanlage, die nur einen Behälter mit lonentauscherharz umfasst, gut angewandt werden.

Nach dem Start 100 des Verfahrens befindet sich der Behälter mit lonentauscherharz zunächst im Normalbetrieb 101, d.h. er nimmt an der Enthärtung von Rohwasser teil.

Beispielsweise mittels eines Durchflussmessers kann überprüft werden, ob gerade eine Wasserentnahme von enthärtetem (oder teilenthärtetem) Wasser stattfindet 102.

Falls eine Wasserentnahme gerade stattfindet, und eine Überprüfung 103 ergibt, dass eine Regeneration des Behälters erforderlich ist, wird diese Regeneration als zeitoptimierte Regeneration gestartet 104. Falls keine Regeneration erforderlich ist, kann der Normalbetrieb fortgesetzt werden 101.

Falls gerade keine Wasserentnahme stattfindet, und eine Überprüfung 105 ergibt, dass eine Regeneration des Behälters erforderlich ist, wird weiterhin überprüft, ob eine zeitnahe Wasserentnahme wahrscheinlich ist 106. Beispielsweise können dafür in einer Steuereinheit Zeitintervalle abgespeichert sein, während denen erfahrungsgemäß erhöhter Bedarf an enthärtetem Wasser besteht, und wenn der gegenwärtige Zeitpunkt (etwa nach Uhrzeit und Wochentag) in ein solches Zeitintervall fällt, wird angenommen, dass eine zeitnahe Wasserentnahme wahrscheinlich ist. Falls eine zeitnahe Wasserentnahme wahrscheinlich ist, wird eine zeitoptimierte Regeneration 104 ausgelöst, obwohl gerade keine Wasserentnahme erfolgt. Falls eine zeitnahe Wasserentnahme nicht wahrscheinlich ist, etwa weil der gegenwärtige Zeitpunkt außerhalb der abgespeicherten Zeitintervalle mit erhöhtem Bedarf an enthärtetem Wasser liegt, wird eine salzoptimierte Regeneration ausgelöst 107. Falls die Prüfung 105 ergibt, dass ohnehin keine Regeneration erforderlich ist, wird der Normalbetrieb fortgesetzt 101.

Während der zeitoptimierten bzw. salzoptimierten Regeneration nimmt der Behälter nicht an der Wasserenthärtung teil. Wenn die zeitoptimierte Regeneration bzw. die salzoptimierte Regeneration beendet ist, wird in den Normalbetrieb 108 zurückgekehrt. Das Verfahren kann dann wie vom Normalbetrieb 101 ausgehend fortgesetzt werden.

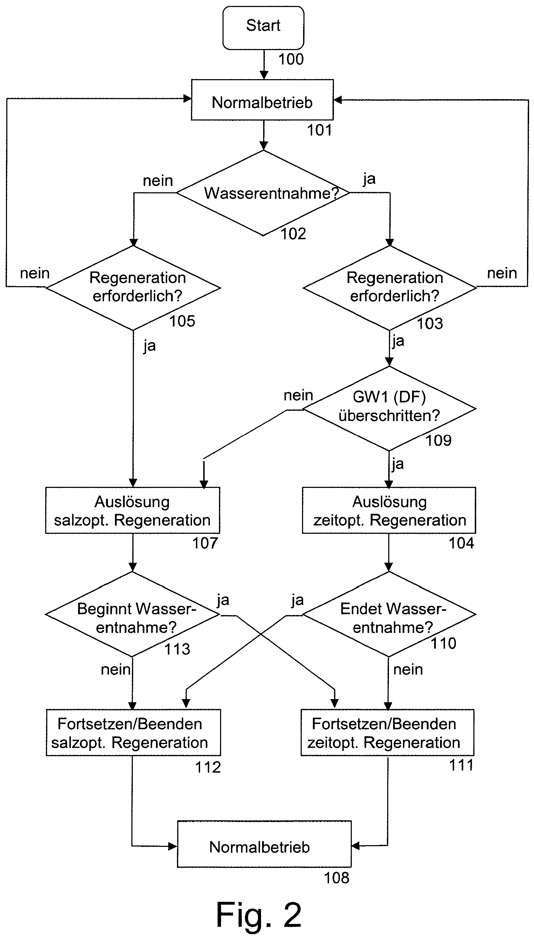

In **Fig. 2** ist eine Variante auf Basis von Alternative 2 dargestellt. Diese Variante überprüft eine weitere Messgröße, um eine Regeneration als zeitoptimierte Regeneration auszulösen. Zudem kann der Regenerationsmodus geändert werden.

Nach dem Start 100 des Verfahrens befindet sich der Behälter mit lonentauscherharz zunächst im Normalbetrieb 101, d.h. er nimmt an der Enthärtung von Rohwasser teil.

Beispielsweise mittels eines Durchflussmessers kann überprüft werden, ob gerade eine Wasserentnahme von enthärtetem (oder teilenthärtetem) Wasser stattfindet 102.

Falls eine Wasserentnahme gerade stattfindet, und eine Überprüfung 103 ergibt, dass eine Regeneration des Behälters erforderlich ist, wird hier weiterhin überprüft, ob die momentane Durchflussmenge pro Zeit dieser Wasserentnahme einen ersten Grenzwert GW1 (DF) überschreitet 109. Falls ja, wird eine zeitoptimierte Regeneration ausgelöst 104. Falls der erste Grenzwert GW1 (DF) bezüglich der Durchflussmenge pro Zeit nicht überschritten wird, wird eine salzoptimierte Regeneration ausgelöst 107. Falls die Überprüfung 103 ergibt, dass ohnehin keine Regeneration erforderlich ist, kann der Normalbetrieb fortgesetzt werden 101.

Falls gerade keine Wasserentnahme stattfindet, und eine Überprüfung 105 ergibt, dass eine Regeneration des Behälters erforderlich ist, wird diese Regeneration als salzoptimierte Regeneration gestartet 107. Falls keine Regeneration erforderlich ist, kann der Normalbetrieb fortgesetzt werden 101.

Nach Auslösung der zeitoptimierten Regeneration 104 wird laufend überprüft, ob die laufende Wasserentnahme endet 110. Falls nicht, wird die laufende zeitoptimierte Regeneration fortgesetzt und schließlich regulär beendet 111. Falls die laufende Wasserentnahme während der laufenden zeitoptimierten Regeneration endet, wird die laufende Regeneration sodann als salzoptimierte Regeneration fortgesetzt und beendet 112, um Kosten insbesondere für Salz einzusparen.

Ebenso wird nach Auslösung der salzoptimierten Regeneration 107 laufend überprüft, ob während der laufenden salzoptimierten Regeneration eine neue Wasserentnahme beginnt 113 (Falls die salzoptimierte Regeneration gestartet wurde, weil bei laufender Wasserentnahme der erste Grenzwert GW1 nicht überschritten wurde, wird in Schritt 113 überprüft, ob nach einem Ende der laufenden Wasserentnahme eine weitere, neue Wasserentnahme gestartet wurde). Falls nicht, wird die laufende salzoptimierte Regeneration fortgesetzt und schließlich regulär beendet 112. Falls eine neue Wasserentnahme während der laufenden salzoptimierten Regeneration beginnt, wird die laufende Regeneration sodann als zeitoptimierte Regeneration fortgesetzt und beendet 111, um möglichst schnell die volle Enthärtungsleistung mit möglichst allen Behältern zur Verfügung zu stellen.

Während der zeitoptimierten bzw. salzoptimierten Regeneration nimmt der Behälter nicht an der Wasserenthärtung teil. Wenn die zeitoptimierte Regeneration bzw. die salzoptimierte Regeneration beendet ist, wird in den Normalbetrieb 108 zurückgekehrt. Das Verfahren kann dann wie vom Normalbetrieb 101 ausgehend fortgesetzt werden.

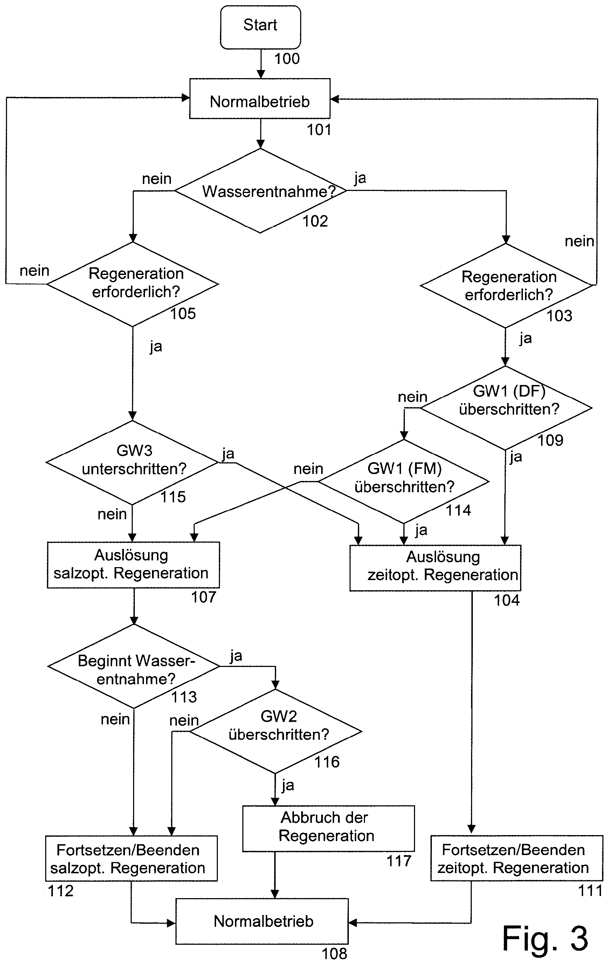

In **Fig. 3** ist eine weitere Variante auf Basis von Alternative 2 dargestellt. Diese Variante überprüft hier zwei weitere Messgrößen, um eine Regeneration als zeitoptimierte Regeneration auszulösen. Zudem kann eine laufende Regeneration abgebrochen werden. Diese Variante ist insbesondere für eine Wasserenthärtungsanlagen mit mehreren Behältern mit lonentauscherharz gut geeignet.

Nach dem Start 100 des Verfahrens befindet sich der Behälter mit lonentauscherharz zunächst im Normalbetrieb 101, d.h. er nimmt an der Enthärtung von Rohwasser teil.

Beispielsweise mittels eines Durchflussmessers kann überprüft werden, ob gerade eine Wasserentnahme von enthärtetem (oder teilenthärtetem) Wasser stattfindet 102.

Falls eine Wasserentnahme gerade stattfindet, und eine Überprüfung 103 ergibt, dass eine Regeneration des Behälters erforderlich ist, wird hier weiterhin überprüft, ob die momentane Durchflussmenge pro Zeit dieser laufenden Wasserentnahme einen ersten Grenzwert GW1 (DF) überschreitet 109. Falls ja, wird eine zeitoptimierte Regeneration ausgelöst 104. Falls der erste Grenzwert GW1 (DF) bezüglich der Durchflussmenge pro Zeit nicht überschritten wird, wird sodann überprüft, ob die aufsummierte, bisherige Durchflussmenge der laufenden Wasserentnahme einen ersten Grenzwert GW1 (FM) überschreitet 114. Falls ja, wird eine zeitoptimierte Regeneration ausgelöst 104. Falls auch der erste Grenzwert GW1 (FM) bezüglich der aufsummierten Durchflussmenge nicht überschritten wird, wird eine salzoptimierte Regeneration ausgelöst 107. Falls die Überprüfung 103 ergibt, dass ohnehin keine Regeneration erforderlich ist, kann der Normalbetrieb fortgesetzt werden 101.

Falls gerade keine Wasserentnahme stattfindet, und eine Überprüfung 105 ergibt, dass eine Regeneration des Behälters erforderlich ist, wird hier weiterhin überprüft, ob eine momentane Restkapazität der gesamten Wasserenthärtungsanlage (einschließlich der Restkapazität etwaiger weiterer Behälter mit lonentauscherharz, die gerade nicht regeneriert werden), einen dritten Grenzwert GW3 unterschreitet 115. Falls der dritte Grenzwert GW3 unterschritten wird, wird eine zeitoptimierte Regeneration ausgelöst 104. Falls der dritte Grenzwert GW3 nicht unterschritten wird, wird eine salzoptimierte Regeneration ausgelöst 107. Falls die Überprüfung 105 ergibt, dass ohnehin keine Regeneration erforderlich ist, kann der Normalbetrieb fortgesetzt werden 101.

Nach Auslösung der salzoptimierten Regeneration 107 wird laufend überprüft, ob während der laufenden salzoptimierten Regeneration eine neue Wasserentnahme beginnt 113 (Falls die salzoptimierte Regeneration gestartet wurde, weil bei laufender Wasserentnahme der erste Grenzwert GW1 (DF) und der erste Grenzwert GW1 (FM) nicht überschritten wurden, wird in Schritt 113 überprüft, ob nach einem Ende der laufenden Wasserentnahme eine weitere, neue Wasserentnahme gestartet wurde). Falls nicht, wird die laufende salzoptimierte Regeneration fortgesetzt und schließlich regulär beendet 112. Falls eine neue Wasserentnahme während der laufenden salzoptimierten Regeneration beginnt, erfolgt eine Überprüfung, ob zu diesem Zeitpunkt die aktuelle (schon teilweise wieder regenerierte) Restkapazität des gerade in Regeneration befindlichen Behälters einen zweiten Grenzwert GW2 überschreitet 116. Falls ja, wird die laufende Regeneration unverzüglich abgebrochen 117 und in den Normalbetrieb zurückgewechselt 108, um möglichst schnell eine maximale Enthärtungsleistung (d.h. enthärtete Menge Wasser pro Zeit) mit möglichst allen Behältern zur Verfügung stellen zu können. Falls der zweite Grenzwert GW2 nicht überschritten wird, wird die laufende salzoptimierte Regeneration fortgesetzt und regulär beendet 112.

In der gezeigten Variante ist vorgesehen, dass nach Auslösung einer zeitoptimierten Regeneration 104 diese stets auch fortgesetzt und regulär beendet wird 111. Alternativ könnte beispielsweise auch vorgesehen sein, dass im Falle des Beginns einer neuen Wasserentnahme (also nachdem die laufende Wasserentnahme geendet hat) während der laufenden zeitoptimierten Regeneration ebenfalls überprüft wird, ob der zweite Grenzwert GW2 überschritten ist, und falls ja die laufende Regeneration abgebrochen und in den Normalbetrieb gewechselt werden (nicht dargestellt).

Während der zeitoptimierten bzw. salzoptimierten Regeneration nimmt der Behälter nicht an der Wasserenthärtung teil. Wenn die zeitoptimierte Regeneration bzw. die salzoptimierte Regeneration beendet ist, wird in den Normalbetrieb 108 zurückgekehrt. Das Verfahren kann dann wie vom Normalbetrieb 101 ausgehend fortgesetzt werden.

Es sei angemerkt, dass die in Fig. 1 vorgestellte Variante für die Alternative 2 ertüchtigt werden kann, indem der Prüfung 103 noch eine Prüfung, ob ein erster Grenzwert GW1 überschritten ist, nachgeschaltet wird, vgl. Fig. 2, Bzz. 109 oder Fig. 3, Bzz. 109 und 114. Ebenso können die in Fig. 2 und Fig. 3 vorgestellten Varianten für die Alternative 1 ertüchtigt werden, indem die Überprüfungen von ersten Grenzwerten 109, 114 weggelassen werden, vgl. Fig. 1, Bzz. 103 und 104.

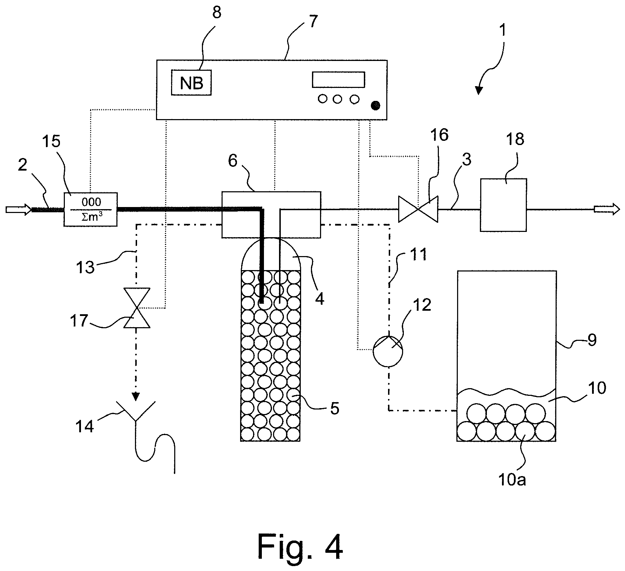

Die **Fig. 4** zeigt schematisch eine Ausführungsform einer Wasserenthärtungsanlage 1, umfassend einen einzelnen Behälter 4 mit lonentauscherharz 5, zur Ausführung des erfindungsgemäßen Verfahrens. In der in Fig. 4 dargestellten Situation ist der Behälter 4 im Normalbetrieb.

Über eine Zulaufleitung 2 für nicht enthärtetes Wasser (auch als "hartes Wasser" oder "Rohwasser" bezeichnet) fließt der Wasserenthärtungsanlage 1 nicht enthärtetes Wasser aus einem öffentlichen Versorgungsnetz (etwa dem Trinkwassernetz) zu. Zulaufendes hartes Wasser (gezeichnet mit einem "dicken Strich") passiert zunächst einen Durchflussmesser (Wasserzähler) 15 und gelangt dann in einen Steuerkopf 6, in welchem nicht näher dargestellte Steuerventile angeordnet sind. Das zulaufende harte Wasser fließt in der gezeigten Ausführungsform vollständig durch den Behälter 4 mit lonentauscherharz 5, und fließt als enthärtetes Wasser (gezeichnet mit einem "dünnen Strich") ab; alternativ ist es auch möglich, nur einen Teil des zulaufenden harten Wassers durch den Behälter 4 zu leiten und zu enthärten, und mit einem restlichen Teil des zulaufenden harten Wassers im Steuerkopf 6 zu vermischen, um teilenthärtetes Wasser zu erhalten (nicht näher dargestellt). Das enthärtete Wasser passiert sodann ein Ventil 16 und gelangt in eine Ablaufleitung 3 für enthärtetes (oder teilenthärtetes) Wasser. Die Ablaufleitung 3 versorgt eine nachgeschaltete Installation 18 (wovon hier beispielhaft nur ein erstes Gerät dargestellt ist).

Wenn das lonentauscherharz 5 im Behälter 4 erschöpft ist, muss es regeneriert werden. Während der Regeneration kann der Behälter 4 kein enthärtetes Wasser zur Verfügung stellen, so dass die Wasserversorgung dann unterbrochen werden muss oder die nachfolgende Installation für die Zeit der Regeneration nur mit hartem Wasser versorgt werden kann. Für die Regeneration steht ein Vorratsgefäß 9 bereit, in welchem eine Regeneriermittellösung 10 bevorratet ist. Die Regeneriermittellösung 10 ist hier eine gesättigte Salzlösung, die durch Auflösen von Salztabletten 10a (typischerweise aus NaCl) hergestellt wird. Die Regeneriermittellösung 10 kann über eine Zuführleitung 11 mittels einer Pumpe 12 in den Steuerkopf 6 gepumpt werden. Vom Steuerkopf 6 ab geht eine Spülleitung 13, die über ein Ventil 17 zu einem Ablauf (Ausguss) 14 führt. Im in Fig. 4 dargestellten Normalbetrieb ist die Pumpe 12 abgeschaltet, so dass keine Salzlösung in den Steuerkopf 6 gepumpt wird (die Leitungen 11, 13 ohne Durchströmung sind strichpunktiert dargestellt).

Der Durchflussmesser 15, die Ventile 16, 17, der Steuerkopf 6 sowie die Pumpe 12 sind mit einer elektronischen Steuereinheit 7 verbunden, die den Erschöpfungsgrad des Behälters 4 überwacht und ggf. eine Regeneration veranlasst. Regenerationen können dabei als zeitoptimierte Regenerationen oder als salzoptimierte Regenerationen ausgelöst und durchgeführt werden. Der Betriebszustand (Normalbetrieb oder Regenerationsbetrieb) und bevorzugt auch der angewandte Regenerationsmodus (zeitoptimiert oder salzoptimiert) werden an einem Display 8 angezeigt. Vorliegend wird "NB" für Normalbetrieb angezeigt.

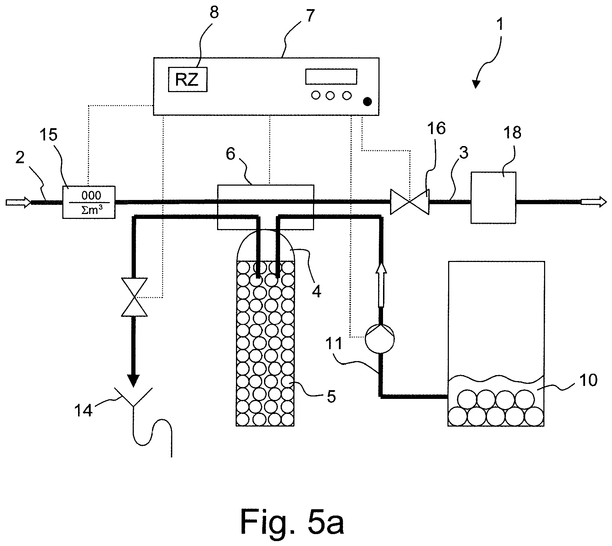

**Fig. 5a** zeigt die Wasserenthärtungsanlage 1 von Fig. 4 während einer zeitoptimierten Regeneration (vgl. Anzeige "RZ" im Display 8) des Behälters 4 beim Besalzen. Die zeitoptimierte Regeneration wird typischerweise ausgelöst, wenn zu Beginn einer anstehenden Regeneration gerade Wasser gezapft wird (was mit dem Durchflussmesser 15 leicht ermittelbar ist), ggf. unter der weiteren Voraussetzung, dass eine weitere der Messgrößen (momentane) Durchflussmenge pro Zeit, bisherige (summierte) Durchflussmenge oder bisherige Durchflussdauer einen zugehörigen ersten Grenzwert GW1 überschreitet. Bei nur einem Behälter 4, wie in der Ausführungsform von Fig. 5a dargestellt, wird jedoch bevorzugt im Falle einer laufenden Wasserentnahme stets eine anstehende Regeneration als zeitoptimierte Regeneration ausgelöst ("Alternative 1"), um Zeiten von Versorgung nur mit hartem Wasser zu minimieren.

Während der Regeneration steht der einzige Behälter 4 nicht für eine Weichwasserbereitung zur Verfügung. Entsprechend muss die Versorgung der Installation 18 mit hartem Wasser aufrecht erhalten werden, das von der Zulaufleitung 2 mittels einer entsprechenden Stellung der Steuerventile (nicht dargestellt) durch den Steuerkopf 6 hindurch zur Ablaufleitung 3 geleitet wird ("Bypass").

Zur Regeneration des lonentauscherharzes 5 im Behälter 4 wird Regeneriermittellösung 10 in den Steuerkopf 6 gepumpt. Um eine schnelle Regeneration zu erreichen, wird hier die Regeneriermittellösung nicht verdünnt, sondern direkt als Arbeitslösung durch den Behälter 4 geleitet ("dicker Strich"); alternativ kann auch die Regeneriermittellösung etwas verdünnt werden, um die Arbeitslösung zu erhalten (nicht dargestellt), beispielsweise auf 40-70% Salzgehalt im Vergleich zu einer gesättigten Regeneriermittellösung mit 100% Salzgehalt. Dabei wird ein hoher Volumenstrom gewählt ("langer Pfeil"). Die verbrauchte Arbeitslösung wird in den Abfluss 14 geleitet.

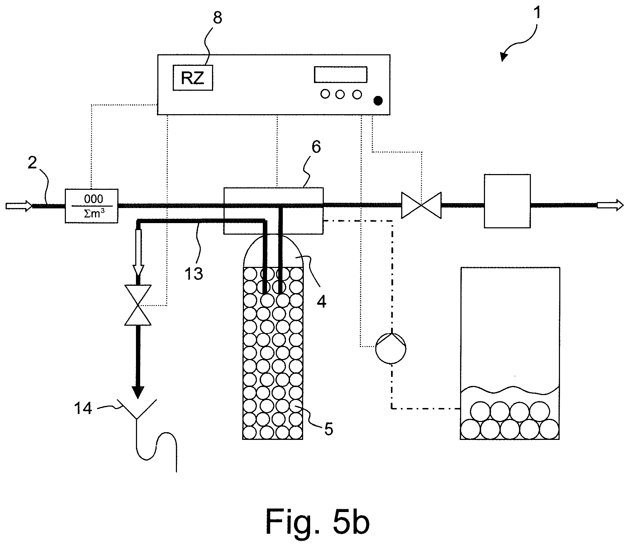

In **Fig. 5b** ist die Wasserenthärtungsanlage 1 von Fig. 4 während einer zeitoptimierten Regeneration (vgl. Anzeige "RZ" im Display 8) des Behälters 4 beim Spülen dargestellt.

Hartes Wasser, das im Steuerkopf 6 aus der Zulaufleitung 2 abgezweigt wird, wird in den Behälter 4 eingeleitet, durchströmt das lonentauscherharz 5 und wird über die Spülleitung 13 an den Ablauf 14 weitergegeben. Der Volumenstrom zum Spülen wird dabei hoch gewählt ("langer Pfeil").

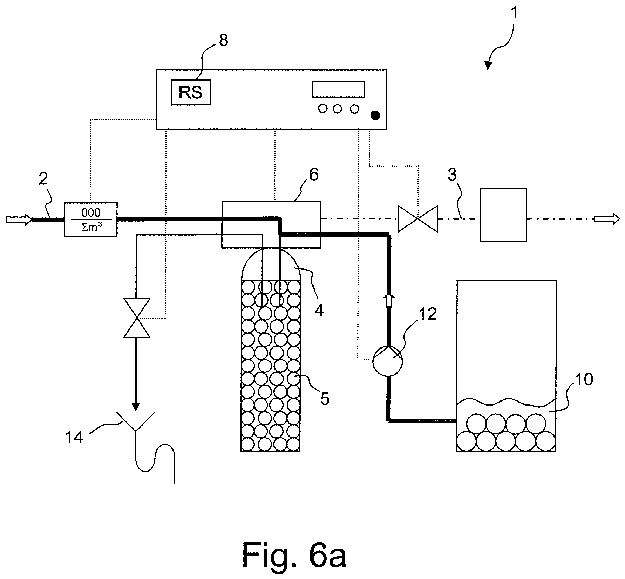

**Fig. 6a** zeigt die Wasserenthärtungsanlage 1 von Fig. 4 während einer salzoptimierten Regeneration (vgl. Anzeige "RS" im Display 8) des Behälters 4 beim Besalzen. Die salzoptimierte Regeneration wird typischerweise ausgelöst, wenn gerade kein Wasser gezapft wird.

Während der Regeneration steht der einzige Behälter 4 wiederum nicht für eine Wasserenthärtung zur Verfügung. Dies ist jedoch unbeachtlich, wenn gerade kein enthärtetes Wasser gezapft wird. Um die Wahrscheinlichkeit einer Wasserentnahme während der salzoptimierten Regeneration zu minimieren, können weitere Kriterien, insbesondere Erfahrungsprofile von vergangenen Wasserentnahmen, für die Auslösung einer salzoptimierten Regeneration hinzugezogen werden. In der gezeigten Situation ist die Ablaufleitung 3 ohne Wasserfluss (strichpunktiert dargestellt). Falls wider Erwarten doch eine Wasserentnahme während der laufenden Regeneration beginnen sollte, kann in den zeitoptimierten Regenerationsmodus gewechselt werden.

Zur Regeneration des lonentauscherharzes 5 im Behälter 4 wird Regeneriermittellösung 10 in den Steuerkopf 6 gepumpt und im Steuerkopf 6 mit hartem Wasser aus der Zulaufleitung 2 verdünnt ("dünner Strich") und in einen Konzentrationsbereich überführt, der eine optimale Salzausbeute ergibt (meist um 5-35% Salzgehalt im Vergleich zu einer gesättigten Regeneriermittellösung mit 100% Salzgehalt). Die so erhaltene Arbeitsmittellösung wird durch den Behälter 4 geleitet. Um eine lange Kontaktzeit mit dem lonentauscherharz 5 zu erreichen, wird hier die Regeneriermittellösung 10 langsam in den Steuerkopf 6 gepumpt ("kurzer Pfeil") und auch entsprechend die Arbeitslösung langsam durch den Behälter 4 geleitet. Die verbrauchte Arbeitslösung wird wiederum in den Abfluss 14 geleitet.

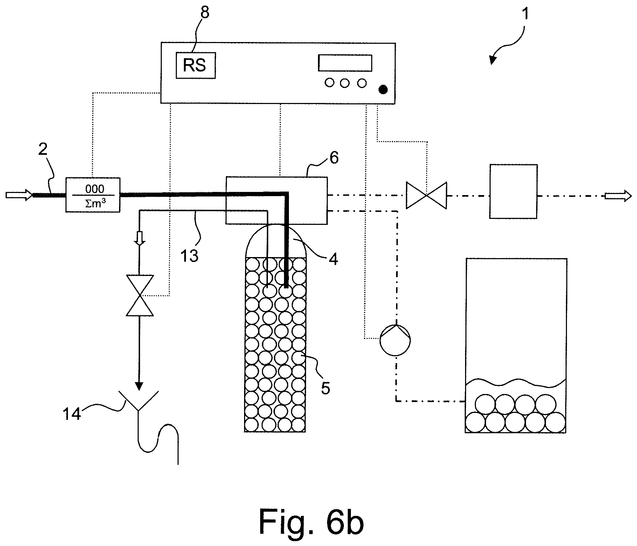

In **Fig. 6b** ist die Wasserenthärtungsanlage 1 von Fig. 4 während einer salzoptimierten Regeneration (vgl. Anzeige "RZ" im Display 8) des Behälters 4 beim Spülen dargestellt.

Hartes Wasser aus der Zulaufleitung 2 wird vom Steuerkopf 6 in den Behälter 4 eingeleitet, durchströmt das lonentauscherharz 5 und wird über die Spülleitung 13 an den Ablauf 14 weitergegeben. Der Volumenstrom zum Spülen wird dabei niedrig gewählt ("kurzer Pfeil"). Die Arbeitsmittellösung wird dadurch langsam aus dem Behälter 4 herausgeschoben, so dass der Austauschprozess von Ionen dabei noch weitergehen bzw. abgeschlossen werden kann. Durch eine lange Dauer des Spülprozesses kann sichergestellt werden, dass die Arbeitslösung vollständig ausgespült wird.

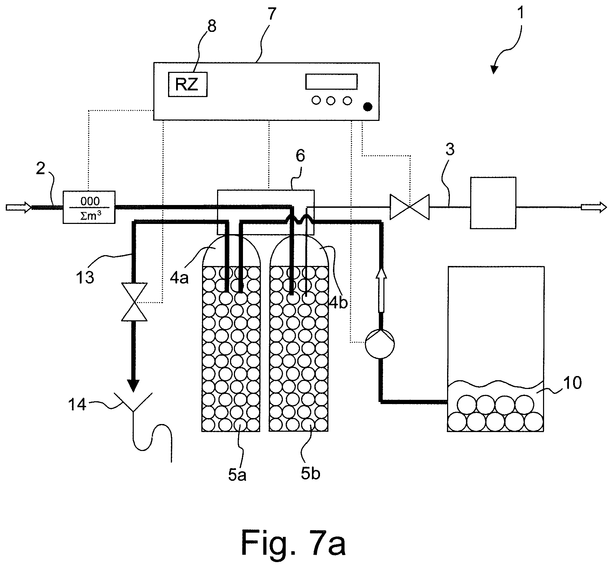

Die **Fig. 7a** zeigt schematisch eine zweite Ausführungsform einer erfindungsgemäßen Wasserenthärtungsanlage 1, umfassend zwei Behälter 4a, 4b mit lonentauscherharz 5a, 5b, zur Ausführung des erfindungsgemäßen Verfahrens.

Die Wasserenthärtungsanlage 1 entspricht weitgehend der in Fig. 4 dargestellten Ausführungsform (siehe oben), jedoch sind die Behälter 4a, 4b wahlweise jeder einzeln oder auch beide parallel zur Enthärtung von zulaufendem Wasser aus der Zulaufleitung 2 mittels des Steuerkopfs 6 schaltbar. Weiterhin können die Behälter 4a, 4b durch eine entsprechende Schaltung der Steuerventile im Steuerkopf 6 jeder einzeln regeneriert werden, während der jeweils andere Behälter 4a, 4b zur Wasserenthärtung eingesetzt wird.

In der Fig. 7a gezeigten Situation ist der linke Behälter 4a gerade in einer zeitoptimierten Regeneration (vgl. Anzeige "RZ" im Display 8) während des Besalzens.

Regeneriermittellösung 10 wird unverdünnt ("dicker Strich") als Arbeitslösung durch den Behälter 4a gepumpt und über die Spülleitung 13 ausgeleitet, wobei ein hoher Volumenstrom gewählt ist ("langer Pfeil"). Dadurch kann ein schneller Austauschvorgang der Ionen im Behälter 4a bzw. dessen lonentauscherharz 5a erreicht werden. Der Behälter 4a wird rasch wieder für einen Normalbetrieb zur Verfügung stehen.

Der rechte Behälter 4b ist hingegen im Normalbetrieb und dient der Bereitstellung von enthärtetem Wasser ("dünner Strich") an der Ablaufleitung 3 aus dem harten Wasser ("dicker Strich") an der Zulaufleitung 2, wenngleich mit geringerem maximalem Durchfluss als es mit beiden Behältern gleichzeitig im Normalbetrieb möglich wäre.

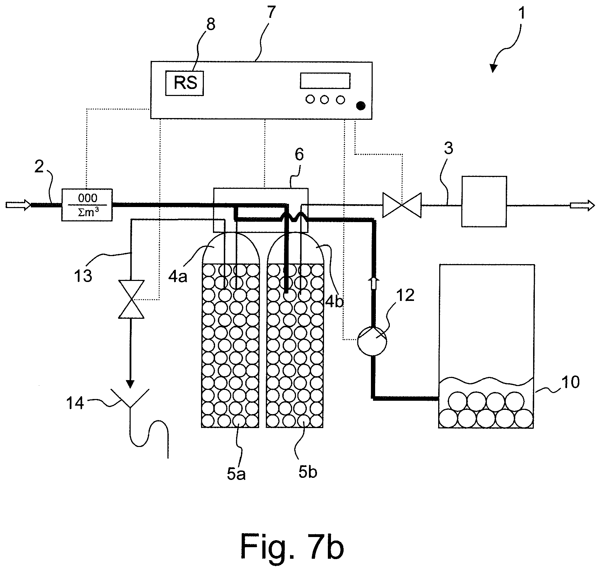

**Fig. 7b** zeigt die Wasserenthärtungsanlage 1 von Fig. 7a mit dem linken Behälter 4a nunmehr in einer salzoptimierten Regeneration (vgl. Anzeige "RS" im Display 8) während des Besalzens.

Gesättigte Regeneriermittellösung 10 ("dicker Strich") wird hier mit hartem Wasser aus der Zulaufleitung 2 gemischt bzw. verdünnt ("dünner Strich"), und die so erhaltene Arbeitslösung wird zur Regeneration des lonentauscherharzes 5a durch den Behälter 4a geleitet. Die verbrauchte Arbeitslösung wird dem Abfluss 14 zugeführt. Der Pumpleistung der Pumpe 12 ist gering ("kurzer Pfeil"), so dass der Volumenstrom der Arbeitslösung auch entsprechend gering ist. Durch die niedrige Konzentration der Arbeitslösung und die lange Kontaktzeit kann die Austauschleistung an Ionen je eingesetzter Salzmenge hoch gehalten werden.

Der rechte Behälter 4b ist wiederum im Normalbetrieb und dient der Bereitstellung von enthärtetem Wasser ("dünner Strich") an der Ablaufleitung 3 aus dem harten Wasser ("dicker Strich") an der Zulaufleitung 2, wenngleich mit geringerem maximalem Durchfluss als es mit beiden Behältern gleichzeitig im Normalbetrieb möglich wäre.

Bei dieser Bauform braucht nicht bei jeder zu Beginn einer Regeneration laufenden Wasserentnahme eine zeitoptimierte Regeneration gestartet werden. Vielmehr kann ein kleiner Bedarf an enthärtetem Wasser ohne Weiteres während einer Regenration, insbesondere einer salzoptimierten Regeneration, gedeckt werden, wie in Fig. 7b dargestellt. Entsprechend ist bei dieser Bauform bevorzugt vorgesehen, eine Regeneration eines Behälters durch die Steuereinheit 7 erst dann als zeitoptimierte Regeneration zu starten, wenn zu Beginn der anstehenden Regeneration nicht nur eine Wasserentnahme bereits läuft, sondern auch gleichzeitig eine weitere der Messgrößen (momentane) Durchflussmenge je Zeit, bisherige (aufsummierte) durchgeflossene Wassermenge oder bisherige Durchflusszeit der laufenden Wasserentnahme einen ersten Grenzwert GW1 überschreitet ("Alternative 2"). Letzteres indiziert einen voraussichtlich hohen Bedarf an enthärtetem Wasser in nächster Zeit, der möglichst bald mit beiden Behältern parallel im Normalbetrieb gedeckt werden sollte. Umgekehrt kann bei Fehlen eines solchen Indizes eine salzoptimierte Regeneration gestartet werden, um Kosten für Regeneriersalz einzusparen. Ein erster Grenzwert GW1 kann fest in der Steuereinheit 7 hinterlegt werden, oder abhängig von beispielsweise der Anzahl der angeschlossenen Behälter, von der Restkapazität der übrigen (nicht zur Regeneration anstehenden) Behälter und/oder von der Regenerationsdauer des zu regenerierenden Behälters von der Steuereinheit 7 bestimmt werden. Es ist jedoch auch möglich, bei der Bauform der Figuren 7a, 7b eine Regeneration stets als zeitoptimierte Regeneration zu starten, wenn zu Beginn der anstehenden Regeneration bereits eine Wasserentnahme läuft.

Für die erste Ausführungsform von Fig. 4-6b und für die zweite Ausführungsform von Fig. 7a7b kann dieselbe Steuereinheit 7 verwendet werden. Die Steuereinheit 7 kann die Wasserenthärtungsanlage 1 gemäß der Alternative 1 oder alternativ gemäß Alternative 2 betreiben bzw. steuern und ist zwischen diesen Alternativen umschaltbar. Eine Umschaltung kann manuell erfolgen (durch eine entsprechende manuelle Eingabe an der Steuereinheit 7) oder auch automatisch erfolgen. Die gezeigte Steuereinheit 7 ist dazu ausgebildet, die Anzahl N von an den Steuerkopf 6 angeschlossenen Behältern 4, 4a, 4b automatisch zu erkennen (etwa mittels mehrerer Druckschalter, von denen jeweils einer durch einen installierten Behälter 4, 4a, 4b eingedrückt wird, nicht näher dargestellt) und anhand der erkannten Anzahl automatisch einen Steuerungsmodus auszuwählen. Die gezeigte Steuereinheit 7 ist hier so ausgebildet bzw. programmiert, dass bei einer Anzahl N=1 von Behältern 4, 4a, 4b ein Steuerungsmodus gemäß Alternative 1 aktiv ist, und bei einer Anzahl N≥2 von Behältern 4, 4a, 4b ein Steuerungsmodus gemäß Alternative 2 aktiv ist.

### Bezugszeichenliste

- 1: Wasserenthärtungsanlage
- 2: Zulaufleitung für hartes Wasser
- 3: Ablaufleitung für enthärtetes oder teilenthärtetes Wasser
- 4, 4a, 4b: Behälter
- 5, 5a, 5b: lonentauscherharz
- 6: Steuerkopf mit Steuerventilen
- 7: elektronische Steuereinheit
- 8: Display
- 9: Vorratsgefäß
- 10: Regeneriermittellösung
- 10a: Salztabletten
- 11: Zuführleitung für Regeneriermittellösung
- 12: Pumpe
- 13: Spülleitung
- 14: Abfluss
- 15: Durchflussmesser (Wasserzähler)
- 16: Ventil
- 17: Ventil
- 18: nachgeschaltete Installation
- 100: Start
- 101: Normalbetrieb (normaler Betriebsmodus)
- 102: Prüfung: laufende Wasserentnahme?
- 103: Prüfung: Regeneration erforderlich?
- 104: Auslösung zeitoptimierte Regeneration
- 105: Prüfung: Regeneration erforderlich?
- 106: Prüfung: zeitnahe Wasserentnahme wahrscheinlich?
- 107: Auslösung salzoptimierte Regeneration
- 108: Normalbetrieb (normaler Betriebsmodus)
- 109: Prüfung: erster Grenzwert GW1 (DF) bezüglich momentaner Durchflussmenge der laufenden Wasserentnahme je Zeit überschritten?
- 110: Prüfung: Endet laufende Wasserentnahme?
- 111: Fortsetzen/Beenden zeitoptimierte Regeneration
- 112: Fortsetzen/Beenden salzoptimierte Regeneration
- 113: Prüfung: Beginnt neue Wasserentnahme?
- 114: Prüfung: erster Grenzwert GW1 (FM) bezüglich aufsummierter Durchflussmenge der laufenden Wasserentnahme überschritten?
- 115: Prüfung: dritter Grenzwert GW3 überschritten?
- 116: Prüfung: zweiter Grenzwert GW2 überschritten?
- 117: Abbruch der Regeneration

## Patentansprüche

1. Verfahren zum Betrieb einer Wasserenthärtungsanlage (1),
wobei die Wasserenthärtungsanlage (1) umfasst
- mindestens einen Behälter (4; 4a, 4b) mit lonentauscherharz (5; 5a, 5b),
- ein Vorratsgefäß (9) mit Regeneriermittellösung (10),
- und eine elektronische Steuereinheit (7) zur automatischen Durchführung von Regenerationen des mindestens einen Behälters (4; 4a, 4b) mit lonentauscherharz (5; 5a, 5b) mittels einer Arbeitslösung, wobei die Arbeitslösung die Regeneriermittellösung (10) oder eine verdünnte Regeneriermittellösung ist,
und wobei die Steuereinheit (7) eine jeweilige Regeneration als salzoptimierte Regeneration oder als zeitoptimierte Regeneration auslösen kann (107, 104),
**dadurch gekennzeichnet,**
**dass** bei zeitoptimierten Regenerationen im Vergleich zu salzoptimierten Regenerationen
- Besalzungszeiten, während denen das lonentauscherharz (5; 5a, 5b) mit der Arbeitslösung in Kontakt steht, verkürzt sind,
- und/oder einzelne Spülschritte, mit denen die Arbeitslösung aus einem Behälter (4; 4a, 4b) mit dem lonentauscherharz (5; 5a, 5b) ausgespült wird, weggelassen oder beschleunigt durchgeführt werden, insbesondere mit kürzerer Dauer und/oder höherem Volumenstrom,
und **dass** eine Regeneration stets als zeitoptimierte Regeneration ausgelöst wird (104), wenn zu Beginn dieser Regeneration eine Wasserentnahme an der Wasserenthärtungsanlage (1) stattfindet.

2. Verfahren nach Anspruch 1, **dadurch gekennzeichnet, dass** die Wasserenthärtungsanlage (1) lediglich einen Behälter (4) mit lonentauscherharz (5) aufweist, und während der Regeneration dieses Behälters (4) die Wasserenthärtungsanlage (1) kein Wasser oder nicht enthärtetes Wasser zur Verfügung stellt.

3. Verfahren zum Betrieb einer Wasserenthärtungsanlage (1),
wobei die Wasserenthärtungsanlage (1) umfasst
- mindestens einen Behälter (4; 4a, 4b) mit lonentauscherharz (5; 5a, 5b),
- ein Vorratsgefäß (9) mit Regeneriermittellösung (10),
- und eine elektronische Steuereinheit (7) zur automatischen Durchführung von Regenerationen des mindestens einen Behälters (4; 4a, 4b) mit lonentauscherharz (5; 5a, 5b) mittels einer Arbeitslösung, wobei die Arbeitslösung die Regeneriermittellösung (10) oder eine verdünnte Regeneriermittellösung ist,
und wobei die Steuereinheit (7) eine jeweilige Regeneration als salzoptimierte Regeneration oder als zeitoptimierte Regeneration auslösen kann (107, 104),
**dadurch gekennzeichnet,**
**dass** bei zeitoptimierten Regenerationen im Vergleich zu salzoptimierten Regenerationen
- Besalzungszeiten, während denen das lonentauscherharz (5; 5a, 5b) mit der Arbeitslösung in Kontakt steht, verkürzt sind,
- und/oder einzelne Spülschritte, mit denen die Arbeitslösung aus einem Behälter (4; 4a, 4b) mit dem lonentauscherharz (5; 5a, 5b) ausgespült wird, weggelassen oder beschleunigt durchgeführt werden, insbesondere mit kürzerer Dauer und/oder höherem Volumenstrom,
und **dass** eine Regeneration stets als zeitoptimierte Regeneration ausgelöst wird (104), wenn
- zu Beginn dieser Regeneration eine Wasserentnahme an der Wasserenthärtungsanlage (1) stattfindet,
- und dabei eine Durchflussgeschwindigkeit oder eine bisherige Durchflussmenge oder eine bisherige Durchflussdauer dieser Wasserentnahme einen ersten Grenzwert GW1 überschreitet.

4. Verfahren nach Anspruch 3, **dadurch gekennzeichnet, dass** die Wasserenthärtungsanlage (1) mehrere Behälter (4a, 4b) mit lonentauscherharz (5a, 5b) aufweist, und während der Regeneration eines ersten Behälters (4a) der oder die übrigen Behälter (4b) enthärtetes Wasser zur Verfügung stellen.

5. Verfahren nach Anspruch 4, **dadurch gekennzeichnet, dass** für die Regeneration des ersten Behälters (4a) der erste Grenzwert GW1 in Abhängigkeit von der Restkapazität des oder der übrigen Behälter (4b) bestimmt wird.

6. Verfahren nach einem der Ansprüche 3 bis 5, **dadurch gekennzeichnet, dass** in der Steuereinheit (7) eine Anzahl N von angeschlossenen Behältern (4; 4a, 4b) mit lonentauscherharz (5; 5a, 5b) erfasst wird, und dass der erste Grenzwert GW1 in Abhängigkeit von der Anzahl N bestimmt wird.

7. Verfahren nach einem der Ansprüche 3 bis 6, **dadurch gekennzeichnet, dass** in der Steuereinheit (7) eine Regenerationsdauer des wenigstens einen Behälters (4; 4a, 4b) mit lonentauscherharz (5; 5a, 5b) erfasst wird, und dass der erste Grenzwert GW1 in Abhängigkeit von der Regenerationsdauer des oder der zu regenerierenden Behälter (4; 4a, 4b) bestimmt wird.

8. Verfahren nach einem der vorhergehenden Ansprüche, **dadurch gekennzeichnet, dass** eine als zeitoptimierte Regeneration ausgelöste Regeneration (104) als salzoptimierte Regeneration fortgesetzt wird (112), wenn während dieser Regeneration die Wasserentnahme endet.

9. Verfahren nach Anspruch 8, **dadurch gekennzeichnet, dass** im Rahmen von zeitoptimierten Regenerationen und salzoptimierten Regenerationen eines Behälters (4; 4a, 4b) die Arbeitslösung kontinuierlich durch den Behälter (4; 4a, 4b) geleitet wird, und dass für die Fortsetzung der Regeneration als salzoptimierte Regeneration (112), während die Arbeitslösung kontinuierlich durch den Behälter (4; 4a, 4b) geleitet wird, die Konzentration und/oder die Durchflussgeschwindigkeit der Arbeitslösung gesenkt wird.

10. Verfahren nach einem der vorhergehenden Ansprüche, **dadurch gekennzeichnet, dass** eine als salzoptimierte Regeneration ausgelöste Regeneration (107) als zeitoptimierte Regeneration fortgesetzt wird (111), wenn während dieser Regeneration eine Wasserentnahme beginnt.

11. Verfahren nach Anspruch 10, **dadurch gekennzeichnet, dass** im Rahmen von zeitoptimierten Regenerationen und salzoptimierten Regenerationen eines Behälters (4; 4a, 4b) die Arbeitslösung kontinuierlich durch den Behälter (4; 4a, 4b) geleitet wird, und dass für die Fortsetzung der Regeneration als zeitoptimierte Regeneration (111), während die Arbeitslösung kontinuierlich durch den Behälter geleitet wird, die Konzentration und/oder die Durchflussgeschwindigkeit der Arbeitslösung erhöht wird.

12. Verfahren nach einem der Ansprüche 1 bis 9, **dadurch gekennzeichnet, dass** eine bereits gestartete Regeneration (104, 107) eines Behälters (4; 4a, 4b) abgebrochen wird und in einen normalen Betriebsmodus gewechselt wird (108, 101), in welchem dieser Behälter (4; 4a, 4b) an der Wasserenthärtung teilnimmt, wenn
- während der Regeneration eine Wasserentnahme neu startet,
- und zu diesem Zeitpunkt die Restkapazität dieses Behälters (4; 4a, 4b) einen zweiten Grenzwert GW2 überschreitet.

13. Verfahren nach einem der vorhergehenden Ansprüche, **dadurch gekennzeichnet,**
**dass** in der Steuereinheit (7) Zeitintervalle erfasst werden, zu denen voraussichtlich ein erhöhter Bedarf an enthärtetem Wasser besteht, und dass eine Regeneration auch dann stets als zeitoptimierte Regeneration ausgelöst wird (104), wenn
- zu Beginn dieser Regeneration keine Wasserentnahme an der Wasserenthärtungsanlage (1) stattfindet,
- und dabei der Beginn dieser Regeneration innerhalb eines solchen Zeitintervalls liegt.

14. Verfahren nach einem der vorhergehenden Ansprüche, **dadurch gekennzeichnet,**
**dass** eine Regeneration auch dann stets als zeitoptimierte Regeneration ausgelöst wird (104), wenn eine Restkapazität der gesamten Wasserenthärtungsanlage (1) einen dritten Grenzwert GW3 unterschreitet.

15. Verfahren nach einem der vorhergehenden Ansprüche, **dadurch gekennzeichnet, dass** bei zeitoptimierten Regenerationen im Vergleich zu salzoptimierten Regenerationen weiterhin
- ein Volumenstrom der Arbeitslösung durch das lonentauscherharz (5; 5a, 5b) vergrößert ist,
- und/oder eine Konzentration der Arbeitslösung erhöht ist.

16. Verwendung einer Wasserenthärtungsanlage (1) in einem Verfahren nach einem der vorhergehenden Ansprüche,
mit der Wasserenthärtungsanlage (1) umfassend
- mindestens einen Behälter (4; 4a, 4b) mit lonentauscherharz (5; 5a, 5b),
- ein Vorratsgefäß (9) mit Regeneriermittellösung (10),
- und eine elektronische Steuereinheit (7) zur automatischen Durchführung von Regenerationen des mindestens einen Behälters (4; 4a, 4b) mit lonentauscherharz (5; 5a, 5b) mittels einer Arbeitslösung,
wobei die Arbeitslösung die Regeneriermittellösung (10) oder eine verdünnte Regeneriermittellösung ist,
wobei die Steuereinheit (7) eine jeweilige Regeneration als salzoptimierte Regeneration oder als zeitoptimierte Regeneration auslösen kann (107, 104),
und wobei die Wasserenthärtungsanlage (1) eingerichtet ist zur Durchführung eines Verfahrens nach einem der vorhergehenden Ansprüche.

17. Verwendung nach Anspruch 16, **dadurch gekennzeichnet, dass** die Steuereinheit (7) dazu ausgebildet ist, zwischen einem Verfahren gemäß Anspruch 1 und einem Verfahren gemäß Anspruch 3 umzuschalten.

18. Verwendung nach Anspruch 17, **dadurch gekennzeichnet, dass** die Steuereinheit (7) dazu ausgebildet ist, zwischen dem Verfahren nach Anspruch 1 und dem Verfahren nach Anspruch 3 in Abhängigkeit von einer Anzahl N von angeschlossenen Behältern (4; 4a, 4b) mit lonentauscherharz (5; 5a, 5b), die in der Steuereinheit (7) erfasst wird, umzuschalten.

19. Verwendung nach Anspruch 18, **dadurch gekennzeichnet, dass** die Steuereinheit (7) dazu ausgebildet ist, bei N=1 in das Verfahren nach Anspruch 1 zu schalten, und bei N≥ 2 in das Verfahren nach Anspruch 3 zu schalten.

## Claims

1. Method for operating a water softening system (1), wherein the water softening system (1) comprises
- at least one container (4; 4a, 4b) with ion exchange resin (5; 5a, 5b),
- a storage vessel (9) with regenerating agent solution (10),
- and an electronic control unit (7) for automatic performance of regenerations of the at least one container (4; 4a, 4b) with ion exchange resin (5; 5a, 5b) by means of a working solution, wherein the working solution is the regenerating agent solution (10) or a dilute regenerating agent solution,
and wherein the control unit (7) can trigger a respective regeneration as a salt-optimized regeneration or as a time-optimized regeneration (107, 104),
**characterized in that**
in case of time-optimized regenerations compared with salt-optimized regenerations
- the salting times during which the ion exchange resin (5; 5a, 5b) is in contact with the working solution, are shortened,
- and/or individual rinsing steps by means of which the working solution is rinsed out of a container (4; 4a, 4b) with the ion exchange resin (5; 5a, 5b), are omitted or accelerated, in particular are performed with a shorter duration and/or a higher volume flow, and that a regeneration is always triggered as a time-optimized regeneration (104) if at the beginning of this regeneration, a water removal from the water softening system (1) takes place.

2. Method according to claim 1, **characterized in that** the water softening system (1) comprises merely one container (4) with ion exchange resin (5) and during regeneration of this container (4), the water softening system (1) does not provide any water or provides unsoftened water.

3. Method for operating a water softening system (1),
wherein the water softening system (1) comprises
- at least one container (4; 4a, 4b) with ion exchange resin (5; 5a, 5b),
- a storage vessel (9) with regenerating agent solution (10),
- and an electronic control unit (7) for automatic performance of regenerations of the at least one container (4; 4a, 4b) with ion exchange resin (5; 5a, 5b) by means of a working solution, wherein the working solution is the regenerating agent solution (10) or a dilute regenerating agent solution,
and wherein the control unit (7) can trigger a respective regeneration as a salt-optimized regeneration or as a time-optimized regeneration (107, 104),
**characterized in that**
in case of time-optimized regenerations compared with salt-optimized regenerations
- the salting times during which the ion exchange resin (5; 5a, 5b) is in contact with the working solution, are shortened,
- and/or individual rinsing steps by means of which the working solution is rinsed out of a container (4; 4a, 4b) with the ion exchange resin (5; 5a, 5b), are omitted or accelerated, in particular are performed with a shorter duration and/or a higher volume flow, and that a regeneration is always triggered as a time-optimized regeneration (104) if
- at the beginning of this regeneration, a water removal from the water softening system (1) takes place,
- and at the same time a flow velocity or a previous flow quantity or a previous flow duration of this water removal exceeds a first limit value GW1.

4. Method according to claim 3, **characterized in that** the water softening system (1) comprises a plurality of containers (4a, 4b) with ion exchange resin (5a, 5b), and during regeneration of a first container (4a), the remaining container(s) (4b) provide(s) softened water.

5. Method according to claim 4, **characterized in that** for regeneration of the first container (4a), the first limit value GW1 is determined in dependence on the residual capacity of the remaining container(s) (4b).

6. Method according to any one of the claims 3 to 5, **characterized in that** a number N of connected containers (4; 4a, 4b) with ion exchange resin (5; 5a, 5b) is identified in the control unit (7), and that the first limit value GW1 is determined in dependence on the number N.

7. Method according to any one of the claims 3 to 6, **characterized in that** a regeneration duration of the at least one container (4; 4a, 4b) with ion exchange resin (5; 5a, 5b) is identified in the control unit (7) and that the first limit value GW1 is determined in dependence on the regeneration duration of the container(s) (4; 4a, 4b) to be regenerated.

8. Method according to any one of the preceding claims, **characterized in that** a regeneration (104) triggered as a time-optimized regeneration is continued as a salt-optimized regeneration (112) when during this regeneration the water removal is terminated.

9. Method according to claim 8, **characterized in that** within the scope of time-optimized regenerations and salt-optimized regenerations of a container (4; 4a, 4b), the working solution is continuously guided through the container (4; 4a, 4b) and that for the continuation of the regeneration as a salt-optimized regeneration (112), the concentration and/or the flow velocity of the working solution is/are reduced while the working solution is continuously guided through the container (4; 4a, 4b).

10. Method according to any one of the preceding claims, **characterized in that** a regeneration (107) triggered as a salt-optimized regeneration is continued as a time-optimized regeneration (111) when a water removal starts during this regeneration.

11. Method according to claim 10, **characterized in that** within the scope of time-optimized regenerations and salt-optimized regenerations of a container (4; 4a, 4b), the working solution is continuously guided through the container (4; 4a, 4b) and that for the continuation of the regeneration as a salt-optimized regeneration (112), the concentration and/or the flow velocity of the working solution is/are increased while the working solution is continuously guided through the container.

12. Method according to any one of the claims 1 to 9, **characterized in that** an already started regeneration (104, 107) of a container (4; 4a, 4b) is stopped and change to a normal operating mode (108, 101) is performed, in which this container (4; 4a, 4b) participates in the water softening when
- a new water removal starts during the regeneration,
- and at this point of time, the residual capacity of this container (4; 4a, 4b) exceeds a second limit value GW2.

13. Method according to any one of the preceding claims,
**characterized in that**
in the control unit (7) time intervals are identified, at which an increased need for softened water is expected,
and that a regeneration is also always triggered as time-optimized regeneration (104) when
- at the beginning of this regeneration, no water removal from the water softening system (1) takes place,
- and at the same time the beginning of this regeneration lies within such a time interval.

14. Method according to any one of the preceding claims,
**characterized in that**
a regeneration is also always triggered as time-optimized regeneration (104) if a residual capacity of the overall water softening system (1) falls below a third limit value GW3.

15. Method according to any one of the preceding claims,
**characterized in that** in case of time-optimized regenerations compared with salt-optimized regenerations furthermore
- a volume flow of the working solution through the ion exchange resin (5; 5a, 5b) is increased,
- and/or a concentration of the working solution is increased.

16. The use of a water softening system (1) in a method according to any one of the preceding claims,
with the water softening system (1) comprising
- at least one container (4; 4a, 4b) with ion exchange resin (5; 5a, 5b),
- a storage vessel (9) with regeneration agent solution (10),
- and an electronic control unit (7) for automatic performance of regenerations of the at least one container (4; 4a, 4b) with ion exchange resin (5; 5a, 5b) by means of a working solution, wherein the working solution is the regeneration agent solution (10) or a dilute regenerating agent solution,
wherein the control unit (7) can trigger a respective regeneration as a salt-optimized regeneration or as a time-optimized regeneration (107, 104),
and wherein the water softening system (1) is configured to perform a method according to any one of the preceding claims.

17. The use according to claim 16, **characterized in that** the control unit (7) is designed to switch between a method according to claim 1 and a method according to claim 3.

18. The use according to claim 17, **characterized in that** the control unit (7) is designed to switch between the method according to claim 1 and the method according to claim 3 in dependence on a number N of connected containers (4; 4a, 4b) with ion exchange resin (5; 5a, 5b), which is identified in the control unit (7).

19. The use according to claim 18, **characterized in that** the control unit (7) is designed to switch to the method according to claim 1 in case of N=1, and to switch to the method according to claim 3 in case of N≥2.

## Revendications

1. Procédé de fonctionnement d'une installation d'adoucissement d'eau (1), l'installation d'adoucissement d'eau (1) comprenant
- au moins un réservoir (4 ; 4a, 4b) avec résine échangeuse d'ions (5 ; 5a, 5b),
- un récipient de stockage (9) contenant une solution de régénérant (10),
- et une unité de commande électronique (7) pour effectuer automatiquement des régénérations dudit au moins un réservoir (4 ; 4a, 4b) avec résine échangeuse d'ions (5 ; 5a, 5b) au moyen d'une solution de travail, la solution de travail étant la solution de régénérant (10) ou une solution de régénérant diluée,
et l'unité de commande (7) pouvant déclencher une régénération respective sous la forme d'une régénération optimisée en sel ou d'une régénération optimisée en temps (107, 104),
**caractérisé en ce**
**que** lors de régénérations optimisées en temps, par rapport à des régénérations optimisées en sel,
- les temps de salage, pendant lesquels la résine échangeuse d'ions (5 ; 5a, 5b) est en contact avec la solution de travail, sont raccourcis,
- et/ou certaines étapes de rinçage, lors lesquelles la solution de travail est éliminée par rinçage d'un réservoir (4 ; 4a, 4b) avec la résine échangeuse d'ions (5 ; 5a, 5b), sont omises ou accélérées, en particulier avec une durée plus courte et/ou un débit volumique plus élevé,
et **qu'**une régénération est toujours déclenchée (104) sous forme de régénération optimisée en temps si, au début de cette régénération, un prélèvement d'eau a lieu sur l'installation d'adoucissement d'eau (1).

2. Procédé selon la revendication 1, **caractérisé en ce que** l'installation d'adoucissement d'eau (1) présente seulement un réservoir (4) avec résine échangeuse d'ions (5) et, pendant la régénération de ce réservoir (4), l'installation d'adoucissement d'eau (1) ne fournit pas d'eau ou fournit une eau non adoucie.

3. Procédé de fonctionnement d'une installation d'adoucissement d'eau (1), l'installation d'adoucissement d'eau (1) comprenant
- au moins un réservoir (4 ; 4a, 4b) avec résine échangeuse d'ions (5 ; 5a, 5b),
- un récipient de stockage (9) contenant une solution de régénérant (10),
- et une unité de commande électronique (7) pour effectuer automatiquement des régénérations dudit au moins un réservoir (4 ; 4a, 4b) avec résine échangeuse d'ions (5 ; 5a, 5b) au moyen d'une solution de travail, la solution de travail étant la solution de régénérant (10) ou une solution de régénérant diluée,
et l'unité de commande (7) pouvant déclencher une régénération respective sous la forme d'une régénération optimisée en sel ou d'une régénération optimisée en temps (107, 104),
**caractérisé en ce**
**que** lors des régénérations optimisées en temps, par rapport aux régénérations optimisées en sel,
- les temps de salage, pendant lesquels la résine échangeuse d'ions (5 ; 5a, 5b) est en contact avec la solution de travail, sont raccourcis,
- et/ou certaines étapes de rinçage, lors lesquelles la solution de travail est éliminée par rinçage d'un réservoir (4 ; 4a, 4b) avec la résine échangeuse d'ions (5 ; 5a, 5b), sont omises ou accélérées, en particulier avec une durée plus courte et/ou un débit volumique plus élevé,
et **qu'**une régénération est toujours déclenchée sous forme de régénération optimisée en temps (104) si
- au début de cette régénération, un prélèvement d'eau a lieu sur l'installation d'adoucissement d'eau (1)
- et une vitesse d'écoulement ou un volume d'écoulement jusqu'à présent ou une durée d'écoulement jusqu'à présent de ce prélèvement d'eau dépasse une première valeur limite GW1.

4. Procédé selon la revendication 3, **caractérisé en ce que** l'installation d'adoucissement d'eau (1) présente plusieurs réservoirs (4a, 4b) avec résine échangeuse d'ions (5a, 5b) et, pendant la régénération d'un premier réservoir (4a), le ou les autres réservoirs (4b) fournissent une eau adoucie.

5. Procédé selon la revendication 4, **caractérisé en ce que**, pour la régénération du premier réservoir (4a), la première valeur limite GW1 est déterminée en fonction de la capacité résiduelle du ou des autres réservoirs (4b).

6. Procédé selon l'une des revendications 3 à 5, **caractérisé en ce qu'**un nombre N de réservoirs (4 ; 4a, 4b) avec résine échangeuse d'ions (5 ; 5a, 5b) connectés est enregistré dans l'unité de commande (7) et que la première valeur limite GW1 est déterminée en fonction du nombre N.

7. Procédé selon l'une des revendications 3 à 6, **caractérisé en ce qu'**une durée de régénération d'au moins un réservoir (4 ; 4a, 4b) avec résine échangeuse d'ions (5 ; 5a, 5b) est enregistrée dans l'unité de commande (7) et que la première valeur limite GW1 est déterminée en fonction de la durée de régénération du ou des réservoirs (4 ; 4a, 4b) à régénérer.

8. Procédé selon l'une des revendications précédentes, **caractérisé en ce qu'**une régénération déclenchée sous forme de régénération optimisée en temps (104) est poursuivie sous forme de régénération optimisée en sel (112) si le prélèvement d'eau se termine pendant cette régénération.

9. Procédé selon la revendication 8, **caractérisé en ce que**, dans le cadre de régénérations optimisées en temps et de régénérations optimisées en sel d'un réservoir (4 ; 4a, 4b), la solution de travail est conduite en continu à travers le réservoir (4 ; 4a, 4b), et que, pour la poursuite de la régénération sous forme de régénération optimisée en sel (112), pendant que la solution de travail est conduite en continu à travers le réservoir (4 ; 4a, 4b), la concentration et/ou la vitesse d'écoulement de la solution de travail sont diminuées.

10. Procédé selon l'une des revendications précédentes, **caractérisé en ce qu'**une régénération déclenchée sous forme de régénération optimisée en sel (107) est poursuivie sous forme de régénération optimisée en temps (111) si un prélèvement d'eau commence pendant cette régénération.

11. Procédé selon la revendication 10, **caractérisé en ce que**, dans le cadre de régénérations optimisées en temps et de régénérations optimisées en sel d'un réservoir (4 ; 4a, 4b), la solution de travail est conduite en continu à travers le réservoir (4 ; 4a, 4b), et que, pour la poursuite de la régénération sous forme de régénération optimisée en temps (111), pendant que la solution de travail est conduite en continu à travers le réservoir, la concentration et/ou la vitesse d'écoulement de la solution de travail sont augmentées.

12. Procédé selon l'une des revendications 1 à 9, **caractérisé en ce qu'**une régénération (104, 107) déjà commencée d'un réservoir (4 ; 4a, 4b) est interrompue et un passage dans un mode de fonctionnement normal (108, 101) a lieu, dans lequel ce réservoir (4 ; 4a, 4b) participe à l'adoucissement d'eau lorsque
- pendant la régénération, un prélèvement d'eau reprend
- et à cet instant la capacité résiduelle dudit réservoir (4 ; 4a, 4b) dépasse une deuxième limite GW2.

13. Procédé selon l'une des revendications précédentes, **caractérisé en ce que** des intervalles de temps, auxquels une demande accrue en eau adoucie est attendue, sont enregistrés dans l'unité de commande (7), et qu'une régénération est toujours déclenchée sous forme de régénération optimisée en temps (104) même si
- au début de cette régénération, aucun prélèvement d'eau n'a lieu sur l'installation d'adoucissement d'eau (1)
- et le début de cette régénération se situe dans un tel intervalle de temps.

14. Procédé selon l'une des revendications précédentes, **caractérisé en ce qu'**une régénération est toujours déclenchée sous forme de régénération optimisée en temps (104) même si une capacité résiduelle de l'ensemble de l'installation d'adoucissement d'eau (1) devient inférieure à une troisième valeur limite GW3.

15. Procédé selon l'une des revendications précédentes, **caractérisé en ce que**, lors de régénérations optimisées en temps, par rapport à des régénérations optimisées en sel, en outre
- un débit volumique de la solution de travail à travers la résine échangeuse d'ions (5 ; 5a, 5b) est augmenté
- et/ou une concentration de la solution de travail est augmentée.

16. Utilisation d'une installation d'adoucissement d'eau (1) dans un procédé selon l'une des revendications précédentes, l'installation d'adoucissement d'eau (1) comprenant
- au moins un réservoir (4 ; 4a, 4b) avec résine échangeuse d'ions (5 ; 5a, 5b),
- un récipient de stockage (9) avec une solution de régénérant (10),
- et une unité de commande électronique (7) pour effectuer automatiquement des régénérations dudit au moins un réservoir (4 ; 4a, 4b) avec résine échangeuse d'ions (5 ; 5a, 5b) au moyen d'une solution de travail, la solution de travail étant la solution de régénérant (10) ou une solution de régénérant diluée,
et l'unité de commande (7) pouvant déclencher une régénération respective sous la forme d'une régénération optimisée en sel ou d'une régénération optimisée en temps (107, 104),
et l'installation d'adoucissement d'eau (1) étant conçue pour mettre en œuvre un procédé selon l'une des revendications précédentes.

17. Utilisation selon la revendication 16, **caractérisée en ce que** l'unité de commande (7) est réalisée pour commuter entre un procédé selon la revendication 1 et un procédé selon la revendication 3.

18. Utilisation selon la revendication 17, **caractérisée en ce que** l'unité de commande (7) est réalisée pour commuter entre le procédé selon la revendication 1 et le procédé selon la revendication 3 en fonction d'un nombre N de réservoirs (4 ; 4a, 4b) avec résine échangeuse d'ions (5 ; 5a, 5b) connectés qui est enregistré dans l'unité de commande (7).

19. Utilisation selon la revendication 18, **caractérisée en ce que** l'unité de commande (7) est réalisée pour passer au procédé selon la revendication 1 lorsque N = 1 et pour passer au procédé selon la revendication 3 lorsque N ≥ 2.
